# EUROPEAN PATENT APPLICATION

(11) **EP 1 640 399 A1**
(43) Date of publication of application: **29.03.2006**
(21) Application number: 04746394.8
(22) Date of filing: 18.06.2004
(51) Int. Cl.: C08G 63/91, C08G 63/695, C08G 64/08, C08G 64/42

(54) **POLYCARBONATE OR POLYESTER HAVING REACTIVE SILICON-CONTAINING GROUP AND ORGANIC/INORGANIC HYBRID POLYMERIC MATERIAL**

(30) Priority: 23.06.2003 JP 2003178328
(71) Applicant: ORIENT CHEMICAL INDUSTRIES, LTD., Osaka-shi, Osaka 535-0022 (JP)
(72) Inventor: ARAKAWA, Motoomi, Osaka-shi, Osaka 5360001 (JP); SUKATA, Kazuaki, Yawata-shi, Kyoto 6148375 (JP)
(74) Representative: Vossius & Partner
(86) International application number: PCT/JP2004/008925
(87) International publication number: WO 2004/113416

(57) **Abstract**

The present invention provides a polycarbonate or polyester having reactive silicon-containing groups which can provide an organic-inorganic hybrid polymeric material having strong cross-linkage to inorganic components based on its many reactive silicon-containing groups. The polycarbonate or polyester has the following unit: 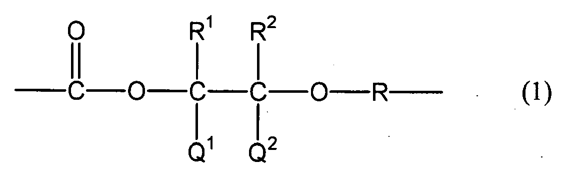 wherein, either Q¹ or Q² is a side chain having a reactive silicon-containing group,
the other of Q¹ or Q², and R¹, R² are each independently hydrogen atom, or an alkyl group, an aryl group, an aroyl group or an aralkyl group, wherein the groups may have a substituted group or atom,
Q¹ and Q² may be taken together to form a ring,
R¹ and R² may be taken together to form a ring, and
R is a bivalent group of alkylene group, arylene group or combination thereof, which accomplishes the above objective.

## Description

This application has priority rights of Japanese patent application No. 2003-178328, filed June 23, 2003, which is herein incorporated by references.

### Field of the Invention

The present invention relates to an organic polymer having an inorganic functional group and an organic-inorganic hybrid polymeric material prepared from the polymer.

### BACKGROUND OF THE INVENTION

Since plastics is superior in molding processability, productivity, light weight, flexibility, mechanical properties and electrical properties, it can be substituted for materials, such as metal, glass, wood and paper, and can be used for many fields such as construction materials, structural portions and mechanical parts of electric and electronic products, exterior and interior parts of automobiles, vehicles, aircraft and ships, daily miscellaneous goods and packing materials. It is therefore strongly desired in these fields that plastics has various properties for each application and reduces its price. However, it is very difficult to continuously develop new plastics complying with required properties. Combination or compound of various plastics and composite of plastics with another material has been conducted to improve properties.

A combination or compound of various plastics includes, for example, copolymerization and polymer blend. Copolymerization is a method of synthesizing a polymer from various monomers. Selection of monomers may lead to new properties that are different from homopolymer made from a simple monomer, or to high performance. Polymer blend is a method for molding a mixture of two or more plastics polymers. In this method, advantage of each plastic polymer may be combined. These methods are described in many books and reports.

Typical combination of plastics and other materials includes, for example, fiber-reinforced plastics(FRP). Several types of FRP have been commercially available. Inorganic/organic hybrid polymers have also been studied as an example of combination of plastics and other materials in recent years. Although, in fiber-reinforced plastics, a dispersed particle size of the inorganic material is not less than micron order, the inorganic/organic hybrid polymers may have molecular-scale dispersion, which causes plastics with high performance or high functionality. In addition, the inorganic/organic hybrid polymer has high potentialities as new materials.

Japanese Kokai Patent Publication Nos. H7(1995)-97499 and H7(1995)-324389 disclose a process including the steps of copolymerizing alkoxysilane having an ethylenically double bond and a monomer having an ethylenically unsaturated bond, and hydrolyzing and condensing the obtained ethylenically polymer having alkoxysilyl group. The ethylenically polymer obtained by radical polymerization or ion polymerization of an ethylenically unsaturated monomer(s) may contain many reactive silicon-containing groups not only at a terminal of its molecule, but within its molecule, and therefore strong linkage between inorganic component and organic component are formed in therein. An example of such ethylenic polymer includes polyethylene, polypropylene, polyvinyl alcohol, polyvinyl acetal, polyvinyl chloride, polyvinylidene chloride, polyvinyl acetate, polystyrene, polybutadiene, polyacrylate, polymethacrylate, polymethyl acrylate, polymethyl methacrylate, polyacrylonitrile, polyacrylamide, polyvinyl pyrrolidone, acrylonitrile-styrene resin, acrylonitrile-butadiene-styrene resin.

In the case of organic polymers except ethylenic polymer, for example, condensation polymer synthesized by polycondensation reaction of basic or acidic bifunctional monomer, it is impracticable to insert a reactive group such as alkoxysilyl group which can react with an inorganic component into the polymer at the polycondensation stage, because no bifunctional alkoxysilane compound (a silane coupling agent) is available for polycondensation reaction. Therefore, an insertion of a reactive group such as alkoxysilyl group which can react with an inorganic component into a molecule at the stage of polycondensation is impracticable. In addition, a conventional condensation polymer has no reactive group, because such reactive group causes coloring or deterioration of weather resistance or light stability. Some kinds of condensation polymer include only one or two reactive group(s) at an end of the molecule.

Insertion of reactive silicon-containing group into a condensation polymer is practicable only at the ends of the molecule, as described in Polymer Vol. 39, No. 4, page 855 (polycaprolactone), published in 1998, Polymer Vol. 37, No. 17, page 3983 (polycaprolactone), published in 1996, Polymer Vol. 38, No. 17, page 4523 (polyphenylene telephthalimide), published in 1997. Introduction of reactive silicon-containing group into inside of molecule has been very difficult.

Thus, inorganic/organic hybrid polymer material which is prepared from a condensation polymer has insufficient linkage strength with inorganic components and the polymer, and has a problem of enhancing the linkage strength. An example of the condensation polymer includes polyester, polyamide such as nylon(™) polycarbonate, polyacetal.

An ester interchange reaction of an oxirane compound and an ester compound is one of the useful reactions in synthetic organic chemistry (Chem. Lett. No.9, page 1043, published in 1978 and Makromol. Chem., Vol. 180, No.2, page 501, published in 1979). Japanese Kokai Patent Publication No. S54(1979)-137093 discloses a process for preparing a modified polyarylene dicarboxylate by reacting polyarylene dicarboxylate with an oxirane compound. Synthetic Organic Chemistry, Vol. 49, no. 3, page 218, published in 1991 discloses a process for preparing a polyester by reacting an oxirane compound with carboxylic acid diester, and a process for inserting an oxirane compound into an ester bond of polyester. However, an application of the insertion reaction to an organic polymer other than polyester has not been made. Furthermore, there is no report that the insertion reaction is applied for producing an organic-inorganic hybrid polymeric material.

### SUMMARY OF THE INVENTION

### TECHNICAL PROBLEMS TO BE RESOLVED BY THE INVENTION

The present invention solves the above-mentioned problems, and the object thereof is to provide a polycarbonate or polyester having reactive silicon-containing groups which can provide an organic-inorganic hybrid polymeric material having strong bond to inorganic components based on its many reactive silicon-containing groups. In addition, the present invention is to provide a polycarbonate or polyester having carbon-carbon unsaturated bond-containing group, which may make high performance or high functionality.

### SOLUTION OF THE PROBLEMS

The present invention provides a polycarbonate or polyester having in its backbone a unit represented by the following formula 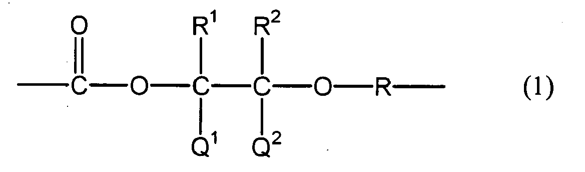 wherein, either Q¹ or Q² is a side chain having a reactive silicon-containing group,
the other of Q¹ or Q², and R¹, R² are each independently hydrogen atom, or an alkyl group, an aryl group, an aroyl group or an aralkyl group, wherein the groups may have a substituted group or atom,
Q¹ and Q² may be taken together to form a ring,
R¹ and R² may be taken together to form a ring, and
R is a bivalent group of alkylene group, arylene group or combination thereof, which accomplishes the above object.

The present invention also provides a polycarbonate or polyester having in its backbone a unit represented by the following formula 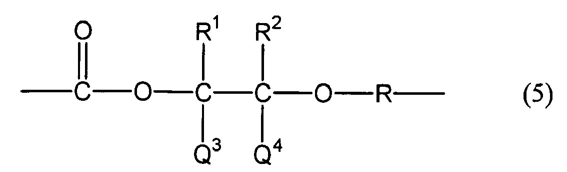 wherein, either Q³ or Q⁴ is a side chain having a carbon-carbon unsaturated bond-containing group,
the other of Q³ or Q⁴, and R¹, R² are each independently hydrogen atom, or an alkyl group, an aryl group, an aroyl group or an aralkyl group, wherein the groups may have a substituted group or atom,
Q³ or Q⁴ may be taken together to form a ring,
R¹ and R² may be taken together to form a ring, and
R is a bivalent group of alkylene group, arylene group or combination thereof.

### BRIEF DESCRIPTION OF THE DRAWINGS

Fig. 1 is a ¹H-NMR spectrum of a polycarbonate which is grafted with reactive silicon-containing groups in its main chain obtained in Example 1.

Fig. 2 is a ¹H-NMR spectrum of a polyarylate which is grafted with reactive silicon-containing groups in its main chain obtained in Example 2.

Fig. 3 is a ¹H-NMR spectrum of a polyethylene terephthalate which is grafted with reactive silicon-containing groups in its main chain obtained in Example 3.

Fig. 4 is a ¹H-NMR spectrum of a polycarbonate (lupilon H-4000, manufactured by MITSUBISHI ENGINEERING-PLASTICS CORPORATION) used as a raw material.

Fig. 5 is a ¹H-NMR spectrum of a polyarylate (Polyarylate U-100, manufactured by UNICHIKA LTD.) used as a raw material.

Fig. 6 is an FT-IR spectrum of a polycarbonate which is grafted with reactive silicon-containing groups in its main chain obtained in Example 1.

Fig. 7 is an FT-IR spectrum of a polyarylate which is grafted with reactive silicon-containing groups in its main chain obtained in Example 2.

Fig. 8 is an FT-IR spectrum of a polyethylene terephthalate which is grafted with reactive silicon-containing groups in its main chain obtained in Example 3.

Fig. 9 is an FT-IR spectrum of a polycarbonate (lupilon H-4000, manufactured by MITSUBISHI ENGINEERING-PLASTICS CORPORATION) used as a raw material.

Fig. 10 is an FT-IR spectrum of a polyarylate (Polyarylate U-100, manufactured by UNICHIKA LTD.) used as a raw material.

Fig. 11 is an IR spectrum of a polyethylene terephthalate used as a raw material, manufactured by Aldrich Co..

### DETAILED DESCRIPTION OF THE PREFERRED EMBODIMENTS

A polycarbonate or polyester of the present invention is prepared by, for example, a method including the step of inserting a oxirane compound having a reactive silicon-containing group into an ester-bond of a polycarbonate or polyester which exists in its main chain.

The oxirane compound is a generic term used to refer to a compound having oxirane (i. e. epoxy group) represented by the following formula (A):

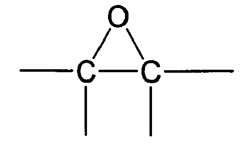

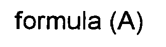

The term "insertion" or "insert reaction" means a reaction of "insertion reaction of an epoxy compound into an ester-bond of polymer backbone", described in Synthetic Organic Chemistry, Vol. 49, no. 3, page 218, published in 1991.

The structure represented by the formula (1) shows an ester-bond portion obtained by a reaction of oxirane-insertion reaction. A side chain having a reactive silicon-containing group represented by either Q¹ or Q² in formula (1) is a residue of an oxirane compound used for insert reaction. That is, the structure of formula (1) shows one which has a polycarbonate or polyester backbone which is grafted by the residue of an oxirane compound. The other of Q¹ or Q² which is not the side chain having a reactive silicon-containing group, and R¹, R² are each independently a hydrogen atom, or an alkyl group, an aryl group, an aroyl group or an aralkyl group, wherein the groups may have a substituted group or atom. Q¹ and Q² may be taken together to form a ring, and R¹ and R² may be taken together to form a ring. R¹ and R² may be the same atom or group or different one. R represents a bivalent group of alkylene group, arylene group or combination thereof which exists in a polyester or polycarbonate as a backbone. The other portion in the main chain which is not identified by the formula (1) has a structure same as or similar to the virgin polycarbonate or polyester. The polycarbonate or polyester of the present invention has a plural number of structure of formula (1) in its main chain.

The polycarbonate or polyester having a carbon-carbon unsaturated bond-containing group according to the present invention can be prepared by a method including the step of inserting an oxirane compound having a unsaturated bond-containing group into an ester-bond of a polycarbonate or polyester which exists in its main chain. The structure represented by the formula (5) also shows an ester-bond portion obtained by a reaction of oxirane-insertion reaction. A side chain having carbon-carbon unsaturated bond-containing group represented by either Q³ or Q⁴ in formula (5) is a residue of an oxirane compound used for insert reaction. That is, the structure of formula (5) shows one which has a polycarbonate or polyester backbone which is grafted with the residue of an oxirane. The other of Q³ or Q⁴ which is not the side chain having a carbon-carbon unsaturated bond-containing group, and R¹, R² are each independently hydrogen atom, or an alkyl group, an aryl group, an aroyl group or an aralkyl group, wherein the groups may have a substituted group or atom. Q³ or Q⁴ may be taken together to form a ring, and R¹ and R² may be taken together to form a ring. R¹ and R² in formula (5) may be the same atom or group or different one. R represents a bivalent group of alkylene group, arylene group or combination thereof which exists in a polyester or polycarbonate as a backbone. The other portion in the main chain which is not identified by the formula (5) has a structure same as or similar to the virgin polycarbonate or polyester. The polycarbonate or polyester of the present invention has a plural number of structure of formula (5) in its main chain.

The polycarbonate or polyester having a reactive silicon-containing group and the polycarbonate or polyester having a carbon-carbon unsaturated bond-containing group are explained hereinafter in details by dividing it to two portion, one being polycabonate and the other being polyester.

### (1-1) Polycarbonate grafted reactive silicon-containing groups in its main chain

A polycarbonate which is grafted with reactive silicon-containing groups in its main according to the present invention is described as a polycarbonate having a repeating unit represented by the following formula 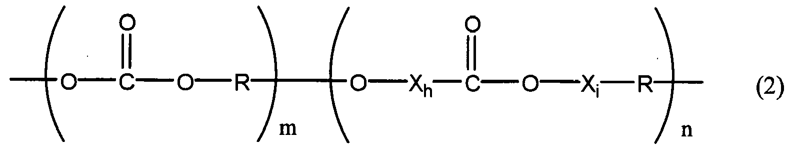 wherein, R is independently a bivalent group of alkylene group, arylene group or combination thereof, and
X is a unit represented by the following formula 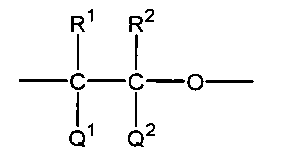 wherein, either Q¹ or Q² is a side chain having a reactive silicon-containing group,
the other of Q¹ or Q², and R¹, R² are each independently hydrogen atom, or an alkyl group, an aryl group, an aroyl group or an aralkyl group, wherein the groups may have a substituted group or atom,
Q¹ and Q² may be taken together to form a ring,
R¹ and R² may be taken together to form a ring, and
h and i are each independently 0 or 1, excepting both h and i are 0,
m is an integer not less than 0, and
n is an integer not less than 1.

R in the formula (2) represents independently an alkylene group containing 1 to 20 carbon atoms, an arylene group containing 3 to 20 carbon atoms or a bivalent group of combination thereof, which may be linear or branched. The group R may be same or different. R may have a substituent group thereon as long as the substituent group does not adversely affect on the silicon-containing groups. Preferred R includes metaphenylene group, paraphenylene group, methylenediphenylene group, ethylidenediphenylene group, propylidenediphenylene group, isopropylidenediphenylene group, butylidenediphenylene group, benzylidenediphenylene group, cyclohexylidenediphenylene group, ethylenediphenylene group, oxydiphenylene group, thiodiphenylene group, sulfinyldiphenylene group, sulfonyldiphenylene group, ethylene group, propylene group, butylene group, cyclohexylene group or the like.

The reactive silicon-containing group can be any functional group which can bond with each other by hydrolysis or polycondensation. The specific reactive silicon-containing group preferably includes alkoxysilyl group such as trialkoxysilyl group, dialkoxyalkylsilyl group and alkoxydialkylsilyl group. The reason why the alkoxysilyl group is preferred is that an alkoxysilyl group can be simply converted into siloxy bond(-Si-O-Si-) through silanol group(-SiOH) by a sol-gel method and also can be comparatively easily handled. Among these, a reactive silicon-containing group having a trialkoxysilyl group is particularly preferable. The reason why it is preferable is that a reactive silicon-containing group having a trialkoxysilyl group is closely crosslinked in an organic-inorganic hybrid polymeric material prepared therefrom by a sol-gel method. Therefore, using a trialkoxysilyl group can lead the improvement of mechanical strength, thermal resistance strength, hardness thereof as compared with the case of using a reactive silicon-containing group having a mono- or dialkoxysilyl group. The silicon atom in the reactive silicon-containing group may be substituted with another metal, such as Ge, Sn, Al, Ti or Zn.

The side chain having a reactive silicon-containing group represented by "the other of Q¹ or Q²" has a structure, for example, represented by the following formula

―L¹―Si(OR⁵)ₚR⁶₃₋ₚ (3)

wherein, L¹ is a binding group,
R⁵ and R⁶ are each independently a group or atom which can form a portion of alkoxysilyl group, and
p is an integer of 1 to 3.

The term "binding group" means a group which has a function of binding a polycarbonate backbone with a reactive silicon-containing group. The binding group represented by L¹ is, typically, a bivalent group of an alkylene group containing 1 to 20 carbon atoms, an arylene group containing 3 to 20 carbon atoms or a combination thereof, or a linkage constituting hetero atoms such as oxygen, nitrogen or sulfur. It is not preferred that the binding group has an active functional groups. The specific example of the binding group includes a group represented by the following formula 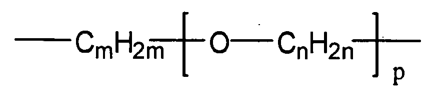 wherein, m and n are each independently an integer of 1 to 4, and
p is an integer of 0 to 3.

R⁵ in the formula (3) may be, for example, an alkyl group containing 2 to 12 carbon atoms, an aryl group containing 6 to 20 carbon atoms, an aralkyl group containing 6 to 20 carbon atoms, methyl group, ethyl group, propyl group, buthyl group, acetyl group or acetoacetyl group. R⁶ in the formula (3) may be, for example, hydrogen or halogen atom, or an alkyl group containing 1 to 12 carbon atoms, an aryl group containing 6 to 20 carbon atoms, an aralkyl group containing 6 to 20 carbon atoms.

The other of Q¹ or Q² which is not the side chain having a reactive silicon-containing group, and R¹, R² are each independently hydrogen atom, or an alkyl group, an aryl group, an aroyl group or an aralkyl group, which may be substituted with a group or atom. R¹ and R² may be taken together to form a ring: The alkyl group indicates, for example, an alkyl group containing 1 to 12 carbon atoms. Specific example of the alkyl group includes methyl group, ethyl group, n-propyl group, i-propyl group, n-butyl group, t-butyl group, cyclopentyl group, cyclohexyl group. The aryl group indicates, for example, an aryl group containing 6 to 20 carbon atoms. Specific example of the aryl group includes phenyl group and naphtyl group. The aroyl group indicates, for example, an aroyl group containing 6 to 20 carbon atoms. Specific example of the aroyl group includes benzoyl group and naphtoyl group. The aralkyl group indicates, for example, an aralkyl group containing 6 to 20 carbon atoms. Specific example of the aralkyl group includes benzyl group, phenylethylene group and naphthylethylene group. R¹ and R² may be the same atom or group or different.

When Q¹ and Q² may be taken together to form a ring, the ring may have the structure that is obtained by linking a side chain having a reactive silicon-containing group represented by either Q¹ or Q² with the other of Q¹ or Q². The ring may have, for example, 5 to 20 ring members, and may have one or more substituent group(s) or atom(s). The ring may have a single ring, or two or more rings, and may have a cross-linkage structure. Specific example of the ring includes, for example, cyclopentylene group, cyclohexylene group and norbornylene group.

When R¹ and R² may be taken together to form a ring, the ring may have, for example, 5 to 20 ring members, and may have one or more substituent group(s) or atom(s). The ring may have the structure containing a single ring, or the one containing two or more rings, and may have a cross-linkage structure. Specific example of the ring in the case that R¹ and R² may be taken together to form a ring includes, for example, cyclopentylene group, cyclohexylene group and norbornylene group.

The substituent group described above includes, for example, -R', -OR', -SR', -NR'R", or nitro group or cyano group, wherein R' and R" are each independently an alkyl group containing 1 to 12 carbon atoms, an aryl group containing 6 to 20 carbon atoms or an aralkyl group containing 6 to 20 carbon atoms. The substituent atom described above includes, for example, halogen atom such as fluorine, chlorine or bromine.

Preferably, the other of Q¹ or Q², which is not the side chain having a reactive silicon-containing group, and R¹, R² are each independently hydrogen atom, or methyl group, ethyl group, n-propyl group, phenyl group, benzoyl group. Preferable specific example of the ring in the case that Q¹ and Q² may be taken together to form a ring includes, for example, cyclopentylene and cyclohexylene. Preferable specific example of the ring in the case that R¹ and R² may be taken together to form a ring includes, for example, cyclopentylene and cyclohexylene.

The polycarbonate which is grafted with reactive silicon-containing groups according to the invention can be synthesized by the reaction of a polycarbonate with an oxirane compound, for more details, by addition reaction of carbonate portion of a polycarbonate with oxirane portion of a oxirane compound. The reaction mechanism is shown by the following simple model (scheme 1): 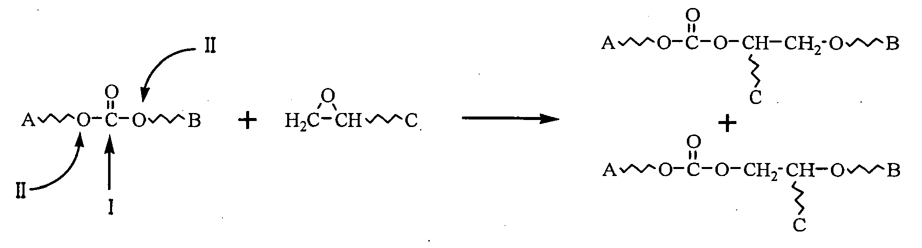 wherein, A and B represents a portion of the structure of a polycarbonate, and C represents a portion of the structure of an oxirane compound. Ring-opening of oxirane (epoxy group) includes α cleavage and β cleavage, which provide two kinds of products. The two kinds of products have insertion structure of an oxirane compound into carbonate bond of a polycarbonate. That is, the products each has the structure which is grafted with a portion of the oxirane compound other than oxirane portion into the polycarbonate.

In more detailed explanation of the reaction, oxirane portion is added into the bond between carbonyl carbon atom of the polycarbonate ("I" in scheme 1) and oxygen atom adjacent to the carbon atom ("II" in scheme 1). Since carbonate group has two oxygen atoms adjacent to carbonyl carbon atom, two oxirane compounds can be added to one carbonate group.

In the present invention, any polycarbonate can be used, including an aliphatic polycarbonate and an aromatic polycarbonate. Commercially available polycarbonate can also be used. Preferred commercially available polycarbonate includes products named lupilon ^{(R)} and Novarex^{(R)} series, manufactured by MITSUBISHI ENGINEERING-PLASTICS CORPORATION, Kariver^{(R)} series, manufactured by SUMITOMO DOW LIMITED, Apex^{(R)} series, manufactured by BAYER, Panlite^{(R)} series, manufactured by TEIJIN CHEMICALS LIMITED and TARFLON^{(R)} series, manufactured by IDEMITSU KOSAN CO., LTD..

When an oxirane compound which has a reactive silicon-containing group is used, a polycarbonate which is grafted with reactive silicon-containing groups in its main chain can be synthesized in one step. The specific example of the oxirane compound includes 3-glycidoxypropyltrimethoxysilane, 3-glycidoxypropyltriethoxysilane, 2-(3,4-epoxycyclohexyl)ethyltrimethoxysilane, 3-glycidoxypropylmethyldimethoxysilane, 3-glycidoxypropylmethyldiethoxysilane, 3-glycidoxypropyldimethylmethoxysilane, 3-glycidoxypropyldimethylethoxysilane or the like. When the oxirane compounds are used for the reaction, reaction conditions should be controlled to avoid a reactive silicon-containing group being reacted with oxirane group, carbonate group, or reactive silicon-containing group etc.

To avoid the reaction of a reactive silicon-containing group, an oxirane compound which has a carbon-carbon unsaturated bond-containing group, for example, an ethylenically unsaturated bond such as vinyl group, methacrylic group (including methacryloyl group), allyl group, an acetylenically unsaturated bond such as acetylene (ethynyl group), can be reacted with a polycarbonate to graft the carbon-carbon unsaturated bond-containing group with the polycarbonate. As used herein, "carbon-carbon unsaturated bond-containing group" may be abbreviated to "unsaturated group".

The resulting compound can be reacted with a silane coupling agent having Si-H bond by addition reaction. The reaction is called "hydrosilylation reaction". The specific example of an oxirane compound having a carbon-carbon unsaturated group includes allyl glycidyl ether, glycidyl methacrylate, 1-vinyl-1,2-epoxycyclohexane (1-vinyl-1-cyclohexene-1,2-epoxide), 4-vinyl-1,2-epoxycyclohexane (4-viny-l-cyclohexene-1,2-epoxide), glycidyl vinylether 1,2-epoxy-3-butene, 1,2-epoxy-5-hexene, 1,2-epoxy-7-octene, 1,2-epoxy-9-decene, 9-oxabicyclo[6.1.0]non-4-ene, glycidyl acrylate, glycidyl methacrylate, ethynyl glycidyl ether and glycidyl propargyl ether.

The specific example of a silane coupling agent having Si-H bond includes trimethoxysilane, triethoxysilane, methyldimethoxysilane, methyldiethoxysilane, dimethylmethoxysilane, dimethylethoxysilane or the like. The reaction method using a silane coupling agent has two steps. However, the reaction method certainly provides an objective product which is grafted with reactive silicon-containing groups in its main chain.

The typical examples of a method for preparing a polycarbonate which is grafted with reactive silicon-containing groups in its main chain is the following, but not be limited to the examples.

### PREPARATION METHOD (1)

An oxirane compound having a reactive silicon-containing group, a polycarbonate and a catalyst are put into a reaction apparatus and mixed under heating. Useful catalyst includes, for example, tertiary amine, quaternary onium salt, metal chloride, crown ether complex. Reaction solvent may be used in the reaction, or may not be used in the case that a heating or mixing apparatus is very powerful and all the materials can be mixed without any reaction solvent. In the present invention, any reaction apparatus may be used, including a wide variety of reaction vessels or blenders which are typically used in organic chemistry, a wide variety of kneading machines or dispersing machines which are typically used for mixing or compounding of raw materials or react-processing in polymer chemistry. Any reaction time or reaction temperature may be used, depending on the type or compounding rate of raw materials, or the type or efficiency of a reaction apparatus. Typical reaction temperature is within the range of 50°C to 300°C, and typical reaction time is within the range of 1 minute to 24 hours. The reaction may be performed under inactive gas to avoid or prevent decomposition of raw materials. Useful inactive gas includes, for example, nitrogen gas and argon gas. The resultant reaction mixture may be poured into poor solvent, or be washed or dried after cooling, to obtain a objective product.

### PREPARATION METHOD (2)

An oxirane compound having a carbon-carbon unsaturated group, a polycarbonate and a catalyst are put into a reaction apparatus and treated by the same way as "PREPARATION METHOD (1)" to obtain a polycarbonate which is grafted with carbon-carbon unsaturated bond-containing groups in its main chain. Then, the polycarbonate, a silane coupling agent having Si-H bond and a catalyst are put into a reaction apparatus, and mixed under heating. Useful catalyst includes, for example, metal salt, metal oxide and metal complex. Reaction solvent may be used in the reaction, or may not be used in the case that a heating or mixing apparatus is very powerful and all the materials can be mixed without any reaction solvent. In the present invention, any reaction apparatus may be used, including a wide variety of reaction vessels or blenders which are typically used in organic chemistry, a wide variety of kneading machines or dispersing machines which are typically used for mixing or compounding of raw materials or react-processing in polymer chemistry. Any reaction time or reaction temperature may be used, depending on the type or compounding rate of raw materials, or the type or efficiency of a reaction apparatus. Typical reaction temperature is within the range of room temperature to 300 °C, and typical reaction time is within the range of 1 minute to 24 hours. The reaction may also be performed under inactive gas to avoid or prevent decomposition of raw materials. The resultant reaction mixture may be poured into poor solvent, or be washed or dried after cooling, to obtain a objective product.

In the PREPARATION METHOD (1) and PREPARATION METHOD (2), more specific preparation method includes, for example, a method for reaction in solvent system, a method for reaction in solid system and a method for reaction in melting system.

A method for reaction in solvent system includes a step of mixing materials (e. g., an oxirane compound) in organic solvent. Any organic solvent which makes it possible to mix a reaction mixture uniformly can be used. Preferred organic solvent is the solvent which dissolve all raw materials. The specific example of organic solvent includes, for example, dichloromethane, chloroform, tetrahydrofuran and trichlorobenzene. In the above reactions, any reaction apparatus may be used, including a wide variety of reaction vessels or blenders which are typically used in organic chemistry. Typical reaction temperature is within the range of room temperature to 200 °C, and typical reaction time is within the range of 30 minute to 24 hours, and the reaction temperature and the reaction time depend on the type or compounding rate of raw materials, or the type or efficiency of a reaction apparatus.

A method for reaction in solid system includes mixing materials (e. g., an oxirane compound) in organic solvent in the first step. Any organic solvent described in the method for reaction in solution system can be used. After mixing, an organic solvent is evaporated to be solidified without avoiding phase separation of materials in the mixture. Then, the resulting solidified product is heated with a suitable heating system to react. The suitable heating system includes a reaction vessel or a drying tumbler which is typically used in the field of synthetic organic chemistry. Any reaction time or reaction temperature may be used, depending on the type or compounding rate of raw materials, or the type or efficiency of a reaction apparatus. Typical reaction temperature is within the range of 50 °C to 200 °C, and typical reaction time is within the range of 1 minute to 24 hours.

In a method for reaction in melting system, an organic solvent may be used in the reaction, or may not be used in the case that a heating or mixing apparatus is very powerful and all the materials can be mixed without any organic solvent. Any reaction apparatus may be used, including a wide variety of reaction vessels or blenders which are typically used in organic chemistry or polymer chemistry, and kneading machines or dispersing machines which are typically used for mixing or compounding of raw materials or reactive-processing. Preferred reaction apparatus includes, for example, twin screw extruder. Any reaction time or reaction temperature may be used, depending on the type or compounding rate of raw materials, or the type or efficiency of a reaction apparatus. Typical reaction temperature is within the range of 200 °C to 300 °C, and typical reaction time is within the range of 1 minute to 10 minutes.

These methods for reaction can be used in the preparation method (1) using an oxirane compound having a reactive silicon-containing group, a polycarbonate and a catalyst; and in the preparation method (2) mixing an oxirane compound having a carbon-carbon unsaturated group, a polycarbonate and a catalyst to obtain a polycarbonate which is grafted with carbon-carbon unsaturated bond-containing groups in its main chain, and adding a silane coupling agent having Si-H bond.

The method of the present invention can control the number of reactive silicon-containing groups inserted in a polycarbonate depending on the amount of raw materials and a catalyst, and reaction conditions. For example, a bisphenol A type polycarbonate with a hypothetical average molecular weight 30,000 represented by the following formula: 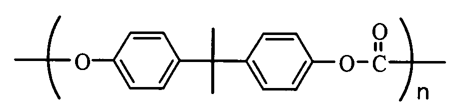 has repeating units "n" of about 118. The number of carbonate group in one molecular is the same as the number of repeating unit, and up to two oxirane groups can be inserted in one carbonate group. In this case, from 1 to 236 reactive silicon-containing groups can be inserted according to the present invention.

### (1-2) Polycarbonate grafted carbon-carbon unsaturated bond-containing groups in its main chain

A polycarbonate which is grafted with carbon-carbon unsaturated bond-containing groups in its main chain can be obtained by reacting an oxirane compound having a carbon-carbon unsaturated group with a polycarbonate as described in preparation method (2). The polycarbonate which is grafted with carbon-carbon unsaturated bond-containing groups in its main chain is an intermediate of the preparation for a polycarbonate which is grafted with reactive silicon-containing groups in its main chain. A polycarbonate which is grafted with reactive silicon-containing groups in its main chain can be obtained by addition reaction of the polycarbonate which is grafted with carbon-carbon unsaturated bond-containing groups in its main chain with a silane coupling agent having Si-H bond.

A polycarbonate which is grafted with carbon-carbon unsaturated bond-containing groups in its main chain according to the present invention is described as a polycarbonate having a repeating unit represented by the following formula 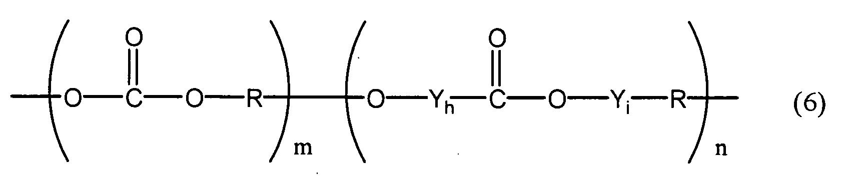 wherein, each R is independently a bivalent group of alkylene group, arylene group or combination thereof, and
Y is a unit represented by the following formula 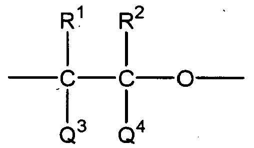 wherein, either Q³ or Q⁴ is a side chain having a carbon-carbon unsaturated bond-containing group,
the other of Q³ or Q⁴, and R¹, R² are each independently hydrogen atom, or an alkyl group, an aryl group, an aroyl group or an aralkyl group, wherein the groups may have a substituted group or atom,
Q³ or Q⁴ may be taken together to form a ring,
R¹ and R² may be taken together to form a ring, and
h and i are each independently 0 or 1, excepting both h and i are 0,
m is an integer not less than 0, and
n is an integer not less than 1.

"R" in formula (6) has the same meaning of "R" in formula (2). The specific examples of the other of Q³ or Q⁴, and R¹, R² are the same as the above specific examples of the other of Q¹ or Q². In addition, the specific example of a ring structure in case that Q³ and Q⁴ are taken together to form a ring is the same as the above specific example of Q¹ and Q².

The specific example of carbon-carbon unsaturated bond-containing groups includes vinyl group, methacrylic group (including methacryloyl group), allyl group, acrylic group (including acryloyl group) and ethynyl group. The carbon-carbon unsaturated bond-containing groups may be one kind of the group, or two or more kinds of the groups. The carbon-carbon unsaturated bond-containing groups may preferably include vinyl group, methacrylic group, allyl group or ethynyl group.

The side chain having a reactive silicon-containing group represented by "the other of Q³ or Q⁴" has a structure, for example, represented by the following formula

―L²―R⁹ (8)

wherein, L² is a binding group, and
R⁹ is a carbon-carbon unsaturated bond-containing group. Preferred carbon-carbon unsaturated bond-containing group represented by R⁹ is one or more groups selected from the group consisting of vinyl group, methacrylic group, allyl group, acrylic group and ethynyl group.

The binding group represented by "L²" means a group which has the function of binding a main chain of polycarbonate with a carbon-carbon unsaturated bond-containing group. The specific example of the binding group "L²" includes a group represented by the following formula:

―CₘH₂ₘ―O―

wherein, m is an integer of 1 to 4.

A carbon-carbon unsaturated bond-containing group in the polycarbonate which is grafted with carbon-carbon unsaturated bond-containing groups is a reactive group. The carbon-carbon unsaturated bond-containing group can be reacted by addition reaction or polymerization reaction. The polycarbonate which is grafted with carbon-carbon unsaturated bond-containing groups can provide its high performance or high functionality.

A polycarbonate which is grafted with carbon-carbon unsaturated bond-containing groups in its main chain can be obtained by reacting an oxirane compound having a unsaturated bond-containing group with a polycarbonate. The reaction inserts an oxirane compound having unsaturated group into an ester group in the main chain of a polycarbonate. The above-mentioned polycarbonate and oxirane compound having a unsaturated bond-containing group may be used in the reaction. The specific preparation method includes the method for reaction in solution system, the method for reaction in solid system and the method for reaction in melting system described above. Preferred preparation method is the method for reaction in melting system to provide a polycarbonate which is grafted with carbon-carbon unsaturated bond-containing groups. The method has the advantage of no need to separate the resulting product from an organic solvent before or after the reaction and similar cumbersome treatments in comparison to the other methods. In addition, the method for reaction in melting system has a shorter reaction time and has excellent efficiency. An kneading machines or dispersing machines used in reactive-processing can be used in the method for reaction in melting system. Preferred reaction apparatus includes, for example, twin screw extruder.

### (2-1) Polyester grafted reactive silicon-containing groups in its main chain

A polyester which is grafted with reactive silicon-containing groups in its main chain according to the present invention is described as a polyester having a repeating unit represented by the following formula 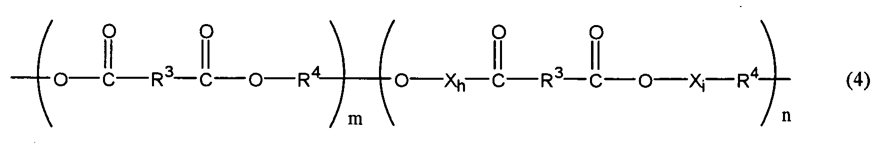 wherein, R³ and R⁴ are each independently a bivalent group of alkylene group, arylene group or combination thereof, and
X is a unit represented by the following formula 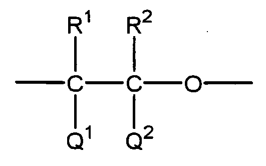 wherein, either Q¹ or Q² is a side chain having a reactive silicon-containing group,
the other of Q¹ or Q², and R¹, R² are each independently hydrogen atom, or an alkyl group, an aryl group, an aroyl group or an aralkyl group, wherein the groups may have a substituted group or atom,
Q¹ and Q² may be taken together to form a ring,
R¹ and R² may be taken together to form a ring, and
h and i are each independently 0 or 1, excepting both h and i are 0,
m is an integer not less than 0, and
n is an integer not less than 1.

R³ in the formula (4) represents, for example, alkylene group derived from dicarbonic acid component of an ingredient of polyester. R⁴ in the formula (4) represents, for example, alkylene group derived from diol component of an ingredient of polyester. R³ and R⁴ in the formula (4) represents, for example, each independently a bivalent group of alkylene group containing 1 to 20 carbon atoms, arylene group containing 3 to 20 carbon atoms or combination thereof. The groups may be linear or branched, and may have a substituted group, provided that the substituent group does not have a negative influence on the silicon-containing groups.

Preferable specific R³ includes, for example, phenylene group, naphthylene group, butylene group, hexylene group, octylene group. Preferable specific R⁴ includes, for example, ethylene group, butylene group, methylenediphenylene group, isopropylidenediphenylene group, oxydiphenylene group, thiodiphenylene group, sulfonyldiphenylene group or the like.

The specific examples of Q¹, Q², R¹ and R² are the same as described above.

The polyester which is grafted with reactive silicon-containing groups according to the invention can be synthesized by the reaction of a polyester with an oxirane compound, for more details, by addition reaction of ester portion of a polyester with oxirane portion of an oxirane compound. The reaction mechanism is shown by the following simple model (scheme 2): 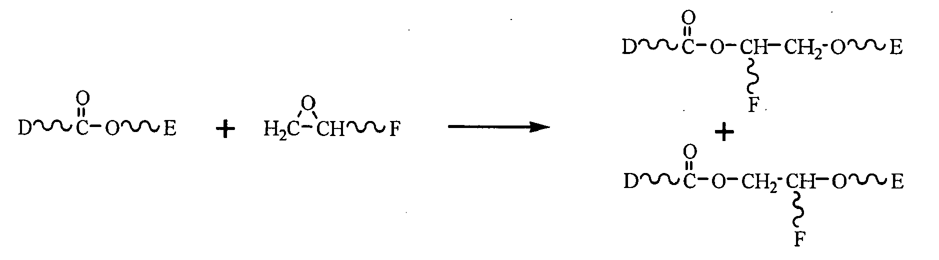 wherein, D and E represents a portion of the structure of a polyester, and
F represents a portion of the structure of an oxirane compound.
Ring-opening of oxirane (epoxy group) includes α cleavage and β cleavage,
which provide two kinds of products.
The two kinds of products have insertion structure of an oxirane compound into ester bond of a polyester. That is, the products each has the structure which is grafted with a portion of the oxirane compound other than oxirane portion into the polyester.

In the present invention, any polyester can be used, including aliphatic polyester and aromatic polyester. Commercially available polyester, for example polyarylate, polyethylene terephthalate or polybutylene terephthalate can also be used. The polyester are available from UNITIKA LIMITED, TEIJIN CHEMICALS LIMITED, TORAY INDUSTRIES, Inc., E.I.du Pont de Nemours & Company Inc. and MITSUI CHEMICALS, Inc.. The specific example of a oxirane compound and a method for reacting an oxirane compound are the same as described above.

The typical examples of a method for preparing a polyester which is grafted with reactive silicon-containing groups in its main chain is the following, but not be limited to the example.

### PREPARATION METHOD (3)

An oxirane compound having a reactive silicon-containing group, a polyester and a catalyst are put into a reaction apparatus and mixed under heating. Useful catalyst includes, for example, tertiary amine, quaternary onium salt, metal chloride, crown ether complex. Reaction solvent may be used in the reaction, or may not be used in the case that a heating or mixing apparatus is very powerful and all the materials can be mixed without any reaction solvent. In the present invention, any reaction apparatus may be used, including a wide variety of reaction vessels or blenders which are typically used in organic chemistry, a wide variety of kneading machines or dispersing machines which are typically used for mixing or compounding of raw materials or react-processing in polymer chemistry. Any reaction time or reaction temperature may be used, depending on the type or compounding rate of raw materials, or the type or efficiency of a reaction apparatus. Typical reaction temperature is within the range of 50°C to 300°C, and typical reaction time is within the range of 1 minute to 24 hours.

The reaction may be performed under inactive gas to avoid or prevent decomposition of raw materials. Useful inactive gas includes, for example, nitrogen gas and argon gas. The resultant reaction mixture may be poured into poor solvent, or be washed or dried after cooling, to obtain a objective product.

### PREPARATION METHOD (4)

An oxirane compound having a carbon-carbon unsaturated group, a polyester and a catalyst are put into a reaction apparatus and treated by the same way as "PREPARATION METHOD (3)" to obtain a polyester which is grafted with carbon-carbon unsaturated bond-containing groups in its main chain. Then, the polyester, a silane coupling agent having Si-H bond and a catalyst are put into a reaction apparatus, and mixed under heating. Useful catalyst includes, for example, metal salt, metal oxide and metal complex. Reaction solvent may be used in the reaction, or may not be used in the case that a heating or mixing apparatus is very powerful and all the materials can be mixed without any reaction solvent. In the present invention, any reaction apparatus may be used, including a wide variety of reaction vessels or blenders which are typically used in organic chemistry, a wide variety of kneading machines or dispersing machines which are typically used for mixing or compounding of raw materials or reactive-processing in polymer chemistry. Any reaction time or reaction temperature may be used, depending on the type or compounding rate of raw materials, or the type or efficiency of a reaction apparatus. Typical reaction temperature is within the range of room temperature to 300 °C, and typical reaction time is within the range of 1 minute to 24 hours. The reaction may also be performed under inactive gas to avoid or prevent decomposition of raw materials. The resultant reaction mixture may be poured into poor solvent, or be washed or dried after cooling, to obtain a objective product.

In the PREPARATION METHOD (3) and PREPARATION METHOD (4), more specific preparation method includes, for example, a method for reaction in solvent system, a method for reaction in solid system and a method for reaction in melting system described in PREPARATION METHOD (1) and PREPARATION METHOD (2). These methods for reaction can be used in the preparation method (3) using an oxirane compound having a reactive silicon-containing group, a polyester and a catalyst; and in the preparation method (3) mixing an oxirane compound having a carbon-carbon unsaturated group, a polyester and a catalyst to obtain a polyester which is grafted with carbon-carbon unsaturated bond-containing groups in its main chain, and adding a silane coupling agent having Si-H bond.

The method of the present invention can control the number of reactive silicon-containing groups inserted in a polyester depending on the amount of raw materials and a catalyst, and reaction conditions. For example, a whole aromatic polyester (polyarylate) with a hypothetical average molecular weight 30,000 represented by the following formula: 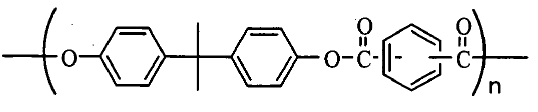 has repeating unit "n" of about 84.
The number of ester group in one molecular is twice the number of repeating unit, thus, from 1 to 168 reactive silicon-containing groups can be inserted according to the present invention.

In another case, a half aromatic polyester (polyethylene terephthalate) with a hypothetical average molecular weight 30,000 represented by the following formula: 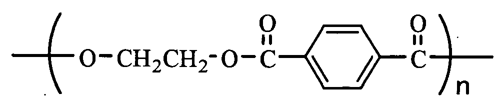 has repeating unit "n" of about 156. The number of ester group in one molecular is twice the number of repeating unit, thus, from 1 to 312 reactive silicon-containing groups can be inserted according to the present invention.

### (2-2) Polyester grafted carbon-carbon unsaturated bond-containing groups in its main chain

A polyester which is grafted with carbon-carbon unsaturated bond-containing groups in its main chain can be obtained by reacting an oxirane compound having a carbon-carbon unsaturated group with a polyester as described in preparation method (4). The polyester which is grafted with carbon-carbon unsaturated bond-containing groups in its main chain is an intermediate of the preparation for a polyester which is grafted with reactive silicon-containing groups in its main chain. A polyester which is grafted with reactive silicon-containing groups in its main chain can be obtained by addition reaction of the polyester which is grafted with carbon-carbon unsaturated bond-containing groups in its main chain with a silane coupling agent having Si-H bond.

A polyester which is grafted with carbon-carbon unsaturated bond-containing groups in its main according to the present invention is described as a polyester having a repeating unit represented by the following formula 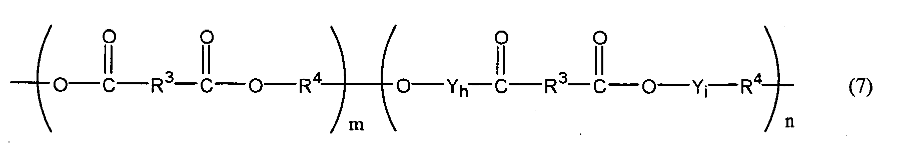 wherein, R³ and R⁴ are each independently a bivalent group of alkylene group, arylene group or combination thereof, and,
Y is a unit represented by the following formula 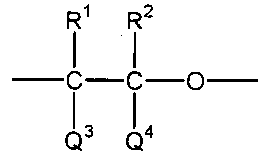 wherein, either Q³ or Q⁴ is a side chain having a carbon-carbon unsaturated bond-containing group,
the other of Q³ or Q⁴, and R¹, R² are each independently hydrogen atom, or an alkyl group, an aryl group, an aroyl group or an aralkyl group, wherein the groups may have a substituted group or atom,
Q³ or Q⁴ may be taken together to form a ring,
R¹ and R² may be taken together to form a ring, and
h and i are each independently 0 or 1, excepting both h and i are 0,
m is an integer not less than 0, and
n is an integer not less than 1.

The specific examples of "R³" and "R⁴" in formula (7) are the same as the above specific examples of "R³" and "R⁴" in formula (4).

A carbon-carbon unsaturated bond-containing group which is included in a polyester which is grafted with carbon-carbon unsaturated bond-containing groups in its main chain is a reactive group. The carbon-carbon unsaturated bond-containing group can be reacted by addition reaction or polymerization reaction. The polyester which is grafted with carbon-carbon unsaturated bond-containing groups can provide its high performance or high functionality.

The polyester which is grafted with carbon-carbon unsaturated bond-containing groups can be obtained by reacting an oxirane compound having a carbon-carbon unsaturated group with a polyester as described above. The reaction makes an insertion of the oxirane compound having a carbon-carbon unsaturated group into an ester bond in polyester's main chain. Any polyester and oxirane compound which are described above can be used. The specific preparation method for preparing the polyester includes the method for reaction in solution system, the method for reaction in solid system and the method for reaction in melting system described above. Preferred preparation method is the method for reaction in melting system to provide a polyester which is grafted with carbon-carbon unsaturated bond-containing groups. The method has the advantage of no need to separate the resulting product from an organic solvent before or after the reaction and similar cumbersome treatments in comparison to the other methods. In addition, the method for reaction in melting system has a shorter reaction time and has excellent efficiency. An kneading machines or dispersing machines used in reactive-processing can be used in the method for reaction in melting system. Preferred reaction apparatus includes, for example, twin screw extruder.

### (3) Organic-Inorganic Hybrid Polymeric Material

An organic-inorganic hybrid polymeric material can be produced by hydrolyzing and polycondensing a polycarbonate or a polyester having reactive silicon-containing groups of the present invention. A sol-gel reaction is mainly utilized for this production.

Hydrolysis and polycondensation by a sol-gel method mean a reaction such that an alkoxy group is converted into a hydroxyl group by reacting water with a metal alkoxy group of a solute in a solution; next, resulting hydroxyl group is concurrently polycondensed. By this sol-gel method, a compound having a hydroxy metal group (such as -Si-OH) occurs dehydration or dealcoholisys with an adjacent molecule or functional group, resulting in three-dimensional crosslinking through an inorganic covalent bond.

Any solvent which dissolves a solute compound can be used. Preferable solvent includes a polar solvent miscible with water in consideration of hydrolysis. The specific solvent includes, for example, alcohols such as methanol, ethanol, n-propanol, isopropanol and n-butanol; polyhydric alcohols such as ethylene glycol and diethylene glycol; glycol monoethers (cellosolve) such as ethylene glycol monomethyl ether and ethylene glycol monoethyl ether; glycol diethers (glime) such as ethylene glycol dimethyl ether, ethylene glycol diethyl ether and diethylene glycol dimethyl ether; ketones such as acetone, methyl ethyl ketone and cyclohexanone; cyclic ethers such as tetrahydrofuran, 1,3-dioxane and 1,4-dioxane; esters such as methyl formate and ethyl acetate; a nonprotic polar solvent such as acetonitrile, formamide, N,N-dimethylformamide and dimethyl sulfoxide, and the like. A mixture solvent of these is also allowable.

A quantity of water having required for converting all alkoxy groups into hydroxyl groups may be added for the use of hydrolyzing, or moisture in a reaction system or the air may be used. Preferable reaction temperature is within the range of room temperature to 100 °C, and typical reaction time is within the range of 0.5 to 24 hours. In addition, the following may be used: an acidic catalyst such as hydrochloric acid, acetic acid, sulfuric acid, nitric acid, benzenesulfonic acid and toluenesulfonic acid, and a basic catalyst such as sodium hydroxide, potassium hydroxide, ammonia, triethylamine, piperidine and DBU (1,8-diazabicyclo[5.4.0]undec-7-ene). In the reaction, not merely hydrolysis but also condensation reaction concurrently progresses depending on a reaction condition. Thereafter, the condensation reaction progresses in the accompaniment to gelation, evaporation of a solvent and drying of a sample, and heating may be performed on proper conditions in the case of further promoting the condensation reaction so as to render the crosslinking more consolidated. Furthermore, in order to inhibit the formation of crack possibly caused on the gelation, drying or heating, formamide, N,N-dimethylformamide, oxalic acid, dioxane and the like may be added. Acetylacetone and the like may also be added as an additive.

In the case of hydrolyzing and polycondensing a polycarbonate or a polyester which is grafted with reactive silicon-containing groups in its main chain of the present invention, a reactive silicon-containing group in the middle of a polymer chain is hydrolyzed so as to be made into a silanol group (-Si-OH), and is thereafter condensed with adjacent another silanol group or reactive silicon-containing group to form a siloxy chain (-Si-O-Si-), whereby being made into a three-dimensionally crosslinked organic-inorganic hybrid polymeric material. Using a polycarbonate or polyester having a larger number of reactive silicon-containing groups, an organic-inorganic hybrid polymeric material with high density of crosslinking can be obtained. A density of crosslinking of the organic-inorganic hybrid polymeric material may affect its property. In the case that the higher of the density of crosslinking of the material is, a flexibility of the material deteriorates, on the other hand, a hardness and a elasticity modulus rises. Desired properties of the material can be obtained by controlling the insertion ratio of reactive silicon-containing groups into a polycarbonate or polyester.

Furthermore, a polycarbonate or a polyester which is grafted with reactive silicon-containing groups in its main chain of the present invention may be hydrolyzed and polycondensed together with metal, metal alkoxide compound, metal oxide, metal complex or inorganic salt having a metallic element such as Si, Ti, Zr, Al, Fe, Cu, Sn, B, Ge, Ce, Ta or W. Thus, a reactive silicon-containing group in the middle of the polymer and a metal alkoxide compound are hydrolyzed and condensed together so as to form a covalent bond between the polymer and minute metal oxide and be made into a mutually microdispersed organic-inorganic hybrid polymeric material, resulting in the adjustment of inorganics content, crosslink density between the polymer and the like, and the improvement of the properties and functions of an organic-inorganic hybrid polymeric material.

An example of a metal alkoxide compound suitable for such uses is represented by the following formula.

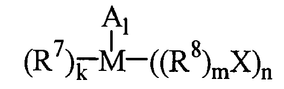

In the formula, R⁷ represents a hydrogen atom, a halogen atom, an alkyl group having 1 to 12 carbon atoms, preferably 1 to 6 carbon atoms, a phenyl group or an aralkyl group. A represents an alkoxy group having 1 to 8 carbon atoms, preferably 1 to 4 carbon atoms. M represents a metallic element selected from the group consisting of Si, Ti, Zr, Al, Fe, Cu, Sn, B, Ge, Ce, Ta, W and the like, preferably Si, Ti, Zr and Al. R⁸ represents an alkylene group or an alkylidene group having 1 to 4 carbon atoms, preferably 2 to 4 carbon atoms. X represents a general functional group 1 such as an isocyanato group, an epoxy group, a carboxyl group, an acid halide group, an acid anhydride group, an amino group, a thiol group, a vinyl group, a (meth)acryl group and a hydrogen atom. k represents an integer of 0 to 5, 1 represents an integer of 1 to 6, m represents an integer of 0 or 1, and n represents an integer of 0 to 5.

An example of a metal alkoxide compound in which M is Si can involve ;
tetraalkoxysilanes such as tetramethoxysilane, tetraethoxysilane, tetraisopropoxysilane and tetrabutoxysilane,
alkylalkoxysilanes such as trimethoxysilane, triethoxysilane, tri-n-propoxysilane, dimethoxysilane, diethoxysilane, diisopropoxysilane, monomethoxysilane, monoethoxysilane, monobutoxysilane, methyldimethoxysilane, ethyldiethoxysilane, dimethylmethoxysilane, diisopropylisopropoxysilane, methyltrimethoxysilane, ethyltriethoxysilane, n-propyl-tri-n-propoxysilane, butyltributoxysilane, dimethyldimethoxysilane, diethyldiethoxysilane, diisopropyldiisopropoxysilane, dibutyldibutoxysilane, trimethylmethoxysilane, triethylethoxysilane, tri-n-propyl-n-propoxysilane, tributylbutoxysilane, phenyltrimethoxysilane, diphenyldiethoxysilane and triphenylmethoxysilane,
(alkyl)alkoxysilanes having an isocyanate group such as 3-isocyanatopropyltriethoxysilane, 2-isocyanatoethyltri-n-propoxysilane, 3-isocyanatopropylmethyldimethoxysilane, 2-isocyanatoethylethyldibutoxysilane, 3-isocyanatopropyldimethylisopropoxysilane, 2-isocyanatoethyldiethylbutoxysilane, di(3-isocyanatopropyl)diethoxysilane, di(3-isocyanatopropyl)methylethoxysilane and ethoxytriisocyanatosilane,
(alkyl)alkoxysilane having an epoxy group such as 3-glycidoxypropyltriethoxysilane, 3-glycidoxypropylmethyldimethoxysilane, 3-glycidoxypropyldimethylethoxysilane, 2-(3,4-epoxycyclohexyl)ethyltrimethoxysilane and 3,4-epoxybutyltrimethoxysilane,
(alkyl)alkoxysilane having a carboxyl group such as carboxymethyltriethoxysilane, carboxymethylethyldiethoxysilane and carboxyethyldimethylmethoxysilane,
alkoxysilane having an acid anhydride group such as 3-(triethoxysilyl)-2-methylpropylsuccinic anhydride,
alkoxysilane having an acid halide group such as 2-(4-chlorosulfonylphenyl)ethyltriethoxysilane,
(alkyl)alkoxysilane having an amino group such as 3-aminopropyltrimethoxysilane, 3-aminopropyltriethoxysilane, N-2-(aminoethyl)-3-aminopropyltriethoxysilane, N-2-(aminoethyl)-3-aminopropylmethyldimethoxysilane and N-phenyl-3-aminopropyltrimethoxysilane,
(alkyl)alkoxysilane having a thiol group such as 3-mercaptopropyltrimethoxysilane, 2-mercaptoethyltriethoxysilane and 3-mercaptopropylmethyldimethoxysilane,
(alkyl)alkoxysilane having a vinyl group such as vinyltrimethoxysilane and vinylmethyldiethoxysilane,
(alkyl)alkoxysilane having a (meth)acryl group such as 3-(meth)acryloxypropyltrimethoxysilane, 3-(meth)acryloxypropyltriethoxysilane and 3-(meth)acryloxypropylmethyldimethylsilane,
(alkyl)alkoxysilane having a halogen atom such as triethoxyfluorosilane, 3-chloropropyltrimethoxysilane, 3-bromopropyltriethoxysilane and 2-chloroethylmethyldimethoxysilane.

A similar compound can be exemplified with regard to not merely Si but also other metals such as Ti, Zr, Fe, Cu, Sn, B, Al, Ge, Ce, Ta and W.

With regard to these metal alkoxide compounds, only one kind thereof may be used or two kinds or more thereof may be used together. Furthermore, the following may be used: a metal alkoxide compound that contains two kinds or more of metallic elements in one molecule, such as Mg[Al(*iso*-OC₃H₇)₄]₂, Ba[Zr₂(OC₂H₅)₉]₂ and (C₃H₇O)₂Zr[Al(OC₃H₇)₄]₂, and a metal alkoxide compound of an oligomer type having two or more repeating units in one molecule, such as tetramethoxysilane oligomer and tetraethoxysilane oligomer. The metal alkoxide compound may contain an acetoxy group or an acetylacetoxy group instead of an alkoxy group.

Furthermore, not merely inorganic compounds as described above but also other plastics and organic compounds may be added to the organic-inorganic hybrid polymeric material of the present invention. In particular, commercial plastics are desirably added to the material because of being advantageous in view of costs; however, they are required to be compatible with a polycarbonate or a polyester which is grafted with reactive silicon-containing groups in its main chain of the present invention. An example of such plastics involves polyacrylate, polymethacrylate, polymethyl acrylate, polymethyl methacrylate, polyethyl methacrylate, polycarbonate, polyethylene terephthalate, polybutylene terephthalate, polyarylate, polysulfone, and the like.

In the case of using these plastics together in the present invention, a polycarbonate or a polyester which is grafted with reactive silicon-containing groups in its main chain of the present invention functions as a compatibilizer, whereby rendering plastics and inorganic compounds miscible, which are usually incompatible.

A specific method for preparing an organic-inorganic hybrid material according to the present invention involves no particular limitation. Any reaction apparatus including, for example, a wide variety of reaction vessels, blenders, kneading machines, dispersing machines or molding machines which are typically used in organic chemistry, inorganic chemistry or polymer chemistry (plastic) can be used for preparing the material.

### EFFECT OF THE INVENTION

A polycarbonate or a polyester which is grafted with reactive silicon-containing groups of the present invention has a plural number of reactive silicon-containing group in the middle of and at a terminal of a molecule, and many reactive silicon-containing groups are included in one molecule. Consequently, an organic-inorganic hybrid material with a high crosslink density, having mutually microdispersed polymer and microsize metal oxides with covalent bond, can be obtained by hydrolyzing and polycondensing a composition containing a polycarbonate or a polyester which is grafted with reactive silicon-containing groups of the present invention.

Thus, the properties of an inorganic material such as heat resistance, weather resistance, hardness, stiffness, chemical resistance, antifouling property, mechanical strength and flame retardancy can be favorably provided for an organic polymer.

An organic-inorganic hybrid material according to the present invention can be used for industrial plastic materials, particularly, structural materials, optical materials, plastic molded products and films, sealing materials, polymer silane coupling agents, compatibilizers, surface modifiers, hard coating agents, resin additives and the like.

The present invention further provides a polycarbonate or a polyester which is grafted with carbon-carbon unsaturated bond-containing groups in its main chain. These polymers have a plural number of reactive silicon-containing group in the middle of and at a terminal of a molecule. The polycarbonate or polyester which is grafted with carbon-carbon unsaturated bond-containing groups can be modified by a variety of methods, which provides plastics having polycarbonate or polyester backbone with high performance or high functionality.

### EXAMPLE

The present invention is further detailed hereinafter referring to synthesis examples, examples and comparative examples, and is not limited thereto. Unless otherwise specified, "part" in each of the examples means "part by weight", and "%" means "% by weight".

### Example 1: Synthesis of polycarbonate grafted reactive silicon-containing groups in its main chain

### Example 1-1: Synthesis of polycarbonate grafted allyl groups in its main chain

Polycarbonate (20.0g, 0.95mmol, lupilon H-4000, manufactured by MITSUBISHI ENGINEERING-PLASTICS CORPORATION), 10.8g (95mmol) of allyl glycidyl ether and 3.2g (9.5mmol) of tetrabutylphosphonium bromide were added to 200ml of anisole, then the mixture was heated with stirring about 125°C for 5 hours under nitrogen atmosphere. After being cooled, the reaction mixture was poured gradually into excessive amounts of methanol and resulting precipitate was collected. The collected precipitate was dissolved in 200ml of chloroform, and was poured gradually into excessive amounts of methanol again to be purified. After being dried, polycarbonate which is grafted with allyl groups in its main chain was obtained (11.5g, a yield of 40.2%). GPC showed that the average molecular weight of the resultant product was 4800. A spectrum data of resulting polycarbonate is as follows;
¹H-NMR (300MHz, CDCl₃)
   - δ(ppm):: 7.2~6.7(13H,m,Ar-H);
   5.9(1 H,m,H₂C=CH-CH₂-);
   5.2(3H,m,H₂C=CH-CH₂-,-CH₂-CH-CH₂-);
   4.2(2H,w,-CH₂-CH-CH₂-);
   4.0(2H,w,H₂C=CH-CH₂-);
   3.8(2H,w,-CH₂-CH-CH₂-);
   1.6(10H,s.-C-CH₃)
FT-IR (Neat)
   ṽ (cm⁻¹):2969(v,C-H);1766(v,C=O);1508(v,C=C);
   1232(v, C-O-C)
GPC
   Weight-average molecular weight: 4800 (standard polystylene conversion)

**ELEMENTARY ANALYSIS**

| | |
|---|---|
| Theoretical value(%) | C:73.3;H:6.2 |
| Observed value(%) | C:72.8;H:6.4 |

Analyses of polycarbonate (lupilon H-4000, manufactured by MITSUBISHI ENGINEERING-PLASTICS CORPORATION) as a raw material are shown by way of comparison;
¹H-NMR(300MHz,CDCl₃),
   - δ(ppm):: 7.3(4H,d,Ar-H);7.2(4H,d,Ar-H);
   1.7(6H,s,-C-CH₃)
FT-IR(Neat)
   *ṽ* (cm⁻¹):2969(v,C-H); 1 774(v,C=O);
   1504(v, C=C);1230(v, C-O-C)

**ELEMENTARY ANALYSIS**

| | |
|---|---|
| Theoretical value(%) | C:75.6;H:5.6 |
| Observed value(%) | C:75.2;H:5.5 |

One allyl group grafting per two carbonate groups was observed by ¹H-NMR. The number of inserted allyl group per molecule was about 8.

### Example 1-2: Synthesis of polycarbonate grafted reactive silicon-containing groups in its main chain

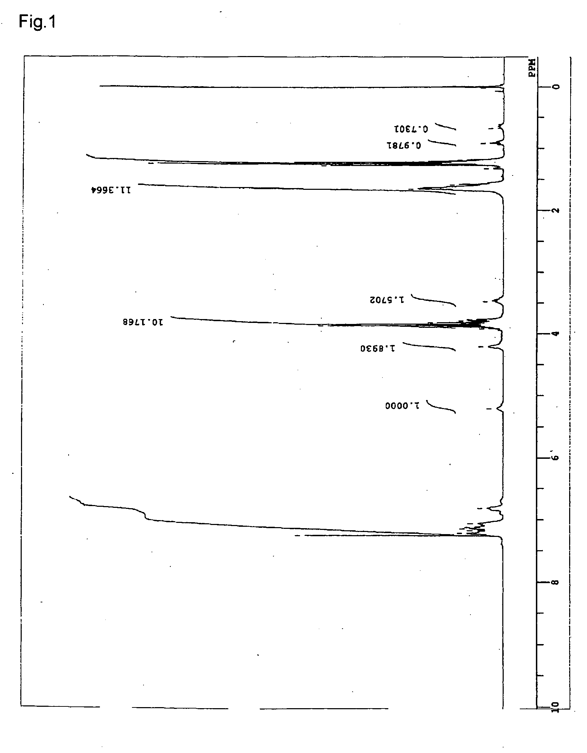

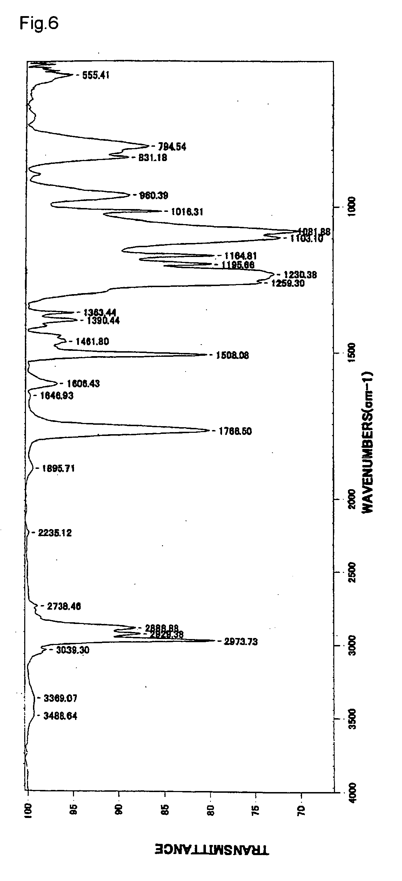

Polycarbonate grafted allyl groups obtained in Example 1-1 (8.0g, 1.7mmol) and a catalytic amount of chloroplatinic acid were added to 150ml of chloroform, and 5.9g (36mmol) of triethoxysilane was added, then the mixture was heated with stirring about 61 °C for 5 hours under nitrogen atmosphere. After being cooled, the reaction mixture was filtered to remove a solid, and the resulting filtrate was devolatilized to remove a solvent and a volatile component. After being dried, polycarbonate which is grafted with reactive silicon-containing groups in its main chain was obtained (8.9g, a yield of 89%). GPC showed that the average molecular weight of the resultant product was 5200. An average of seven triethoxysilyl groups grafting per molecule was observed by ¹H-NMR. Furthermore, a portion of the triethoxysilyl groups was reacted with excessive amounts of triethoxysilane. An elementary analysis data including Si-value and a spectrum data of the resulting polycarbonate is as follows. Fig. 1 shows a ¹H-NMR spectrum of the resulting polycarbonate, and Fig. 6 shows an FT-IR spectrum of the resulting polycarbonate.

**ELEMENTARY ANALYSIS**

| | |
|---|---|
| Theoretical value(%) | C:63.0;H:6.9;Si:6.4 |
| Observed value(%) | C:62.4;H:7.2;Si:5.4 |

¹H-NMR(300MHz,CDCl₃)
   δ(ppm):6.7~7.2(14H,m,Ar-H);3.9(8H,q,SiO-CH₂);1.6(11H,s, C-CH₃);1.2(11H,t,SiOCH₂-CH₃)
FT-IR(film)
   *ṽ* (cm⁻¹):1766(v,C=O);1508(v,C=C);
   1230(v, C-O-C);1103(v, Si-O-C)

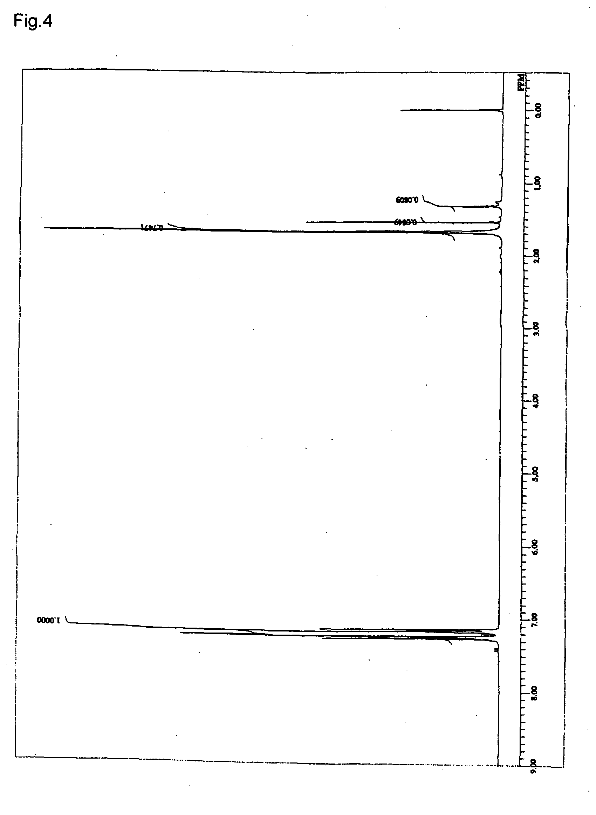

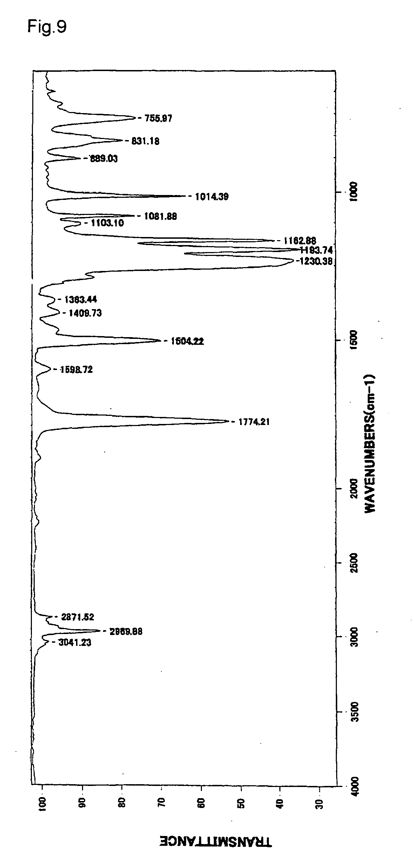

Analyses of polycarbonate (lupilon H-4000, manufactured by MITSUBISHI ENGINEERING-PLASTICS CORPORATION) as a raw material are shown by way of comparison. Figs. 4 and 9 show a¹H-NMR spectrum and a FT-IR spectrum of the polycarbonate (lupilon H-4000), respectively.

**¹ H-NMR(300MHz. CDCl₃)**

| | |
|---|---|
| δ(ppm): | 7.3(4H,d,Ar-H); |
| | 7.2(4H,d,Ar-H); |
| | 1.7(6H,s,-C-CH₃) |

FT-IR(film)
   *ṽ* (cm⁻¹):1774(v,C=O);1504(v,C=C);1230(v,C-O-C)

The product synthesized by Example 1 was identified as a polycarbonate which is grafted with reactive silicon-containing groups in its main chain by comparison and observational study of the analyses.

### Example 2: Synthesis of polyarylate grafted reactive silicon-containing groups in its main chain

### Example 2-1: Synthesis of polyarylate grafted allyl groups in its main chain

Polyarylate (8.0g, 0.13mmol, Polyarylate U-100, manufactured by UNICHIKA LTD.), 25.4g (223mmol) of allyl glycidyl ether and 0.8g (2.23mmol) of tetrabutylphosphonium bromide were added to a 50ml three-necked flask, then the mixture was heated with stirring about 75°C for 3 hours under nitrogen atmosphere. After being cooled, the reaction mixture was dissolved in 100ml of chloroform, and the solution was poured gradually into excessive amounts of methanol, then the resulting precipitate was collected. The collected precipitate was dissolved in 50ml of chloroform, and was poured gradually into excessive amounts of methanol again to be purified. After being dried, polyarylate which is grafted with allyl groups in its main chain was obtained (5.2g, a yield of 57.9%). GPC showed that the average molecular weight of the resultant product was 6700. A spectrum data of resulting polycarbonate is as follows;
¹H-NMR(300MHz,CDCl₃)
   - δ(ppm):: 9.0~7.6(7H,m,Ar-H);
   7.3~6.7(11H,m,Ar-H);
   5.9(1H,b,H₂C=CH-CH₂-);4.3(2H,w,-CH₂-CH-CH₂-);
   4.0(2H,b,H₂C=CH-CH₂-);
   3.8(2H,b,-CH₂-CH-CH₂-);
   1.7~1.6(8H,2s,-C-CH₃)

FT-IR(Neat)
   *ṽ* (cm⁻¹):1733(v,C=O);1506(v,C=C);
   1203(v,C-O-C)
GPC
   Weight-average molecular weight: 6700(standard polystylene conversion)

**ELEMENTARY ANALYSIS**

| | |
|---|---|
| Theoretical value(%) | C:74.5;H:5.8 |
| Observed value(%) | C:74.4;H:5.6 |

Analyses of polyarylate (Polyarylate U-100, manufactured by UNICHIKA LTD.) as a raw material are shown by way of comparison;
¹H-NMR(300MHz,CDCl₃)
   - δ(ppm):: 9.0~7.6(8H, m,Ar-H);
   7.3(8H,d,Ar-H)
   7.2(8H,d,Ar-H);
   1.7(12H,s,-C-CH₃)
FT-IR(Neat)
   *ṽ* (cm⁻¹): 1 739(v,C=O); 1504(v, C=C);
   1203(v, C-O-C)

**ELEMENTARY ANALYSIS**

| | |
|---|---|
| Theoretical value(%) | C:77.1;H:5.1 |
| Observed value(%) | C:77.0;H:5.2 |

One allyl group grafting per three ester groups was observed by ¹H-NMR. The number of inserted allyl group per molecule was about 10.

### Example 2-2: Synthesis of polyarylate grafted reactive silicon-containing groups in its main chain

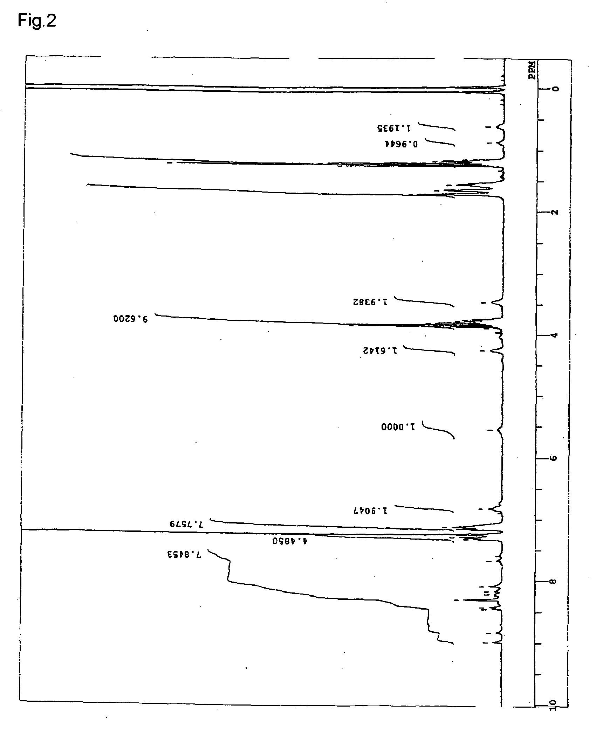

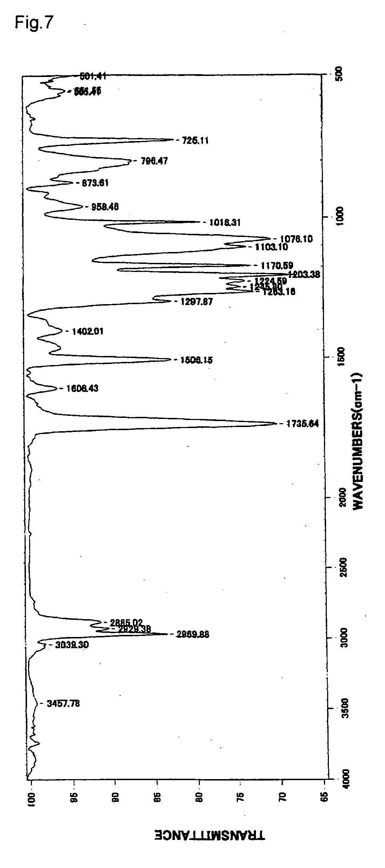

Polyarylate grafted allyl groups obtained in Example 2-1 (5.0g, 0.75mmol) and a catalytic amount of chloroplatinic acid were added to 75ml of chloroform, and 1.3g (7.6mmol) of triethoxysilane was added, then the mixture was heated with stirring about 62°C for 6 hours under nitrogen atmosphere. After being cooled, the reaction mixture was filtered to remove a solid, and the resulting filtrate was devolatilized to remove solvents and volatile components. After being dried, polyarylate which is grafted with reactive silicon-containing groups in its main chain was obtained (6.1g, a yield of 96.8%). GPC showed that the average molecular weight of the resultant product was 7800. An average of ten triethoxysilyl groups grafting per molecule was observed by H-NMR. An elementary analysis data including Si-value and a spectrum data of the resulting polycarbonate is as follows. Figs. 2 and 7 show a ¹H-NMR spectrum and a FT-IR spectrum of the resulting polyarylate, respectively.

**ELEMENTARY ANALYSIS**

| | |
|---|---|
| Theoretical value(%) | C:68.5;H:6.6;Si:3.4 |
| Observed value(%) | C:67.9;H:6.4;Si:3.3 |

¹H-NMR(300MHz,CDCl₃)
   δ(ppm)=7.6~9.0(BH,m,Ar-H);6.8~7.3(14H,m,Ar-H);3.9(8H,q,SiO-CH₂);1.7(12H,w,C-CH₃);1.3(10H,t,SiOCH₂-CH₃)
FT-IR(film)
   *ṽ* (cm⁻¹):1735(v,C=O);1506(v,C=C);
   1203(v,C-O-C);1103(v,Si-O-C)

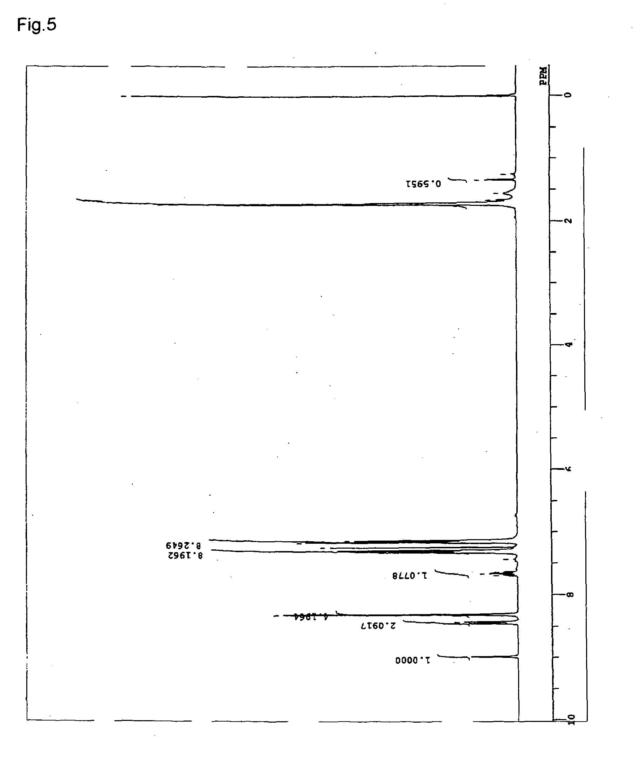

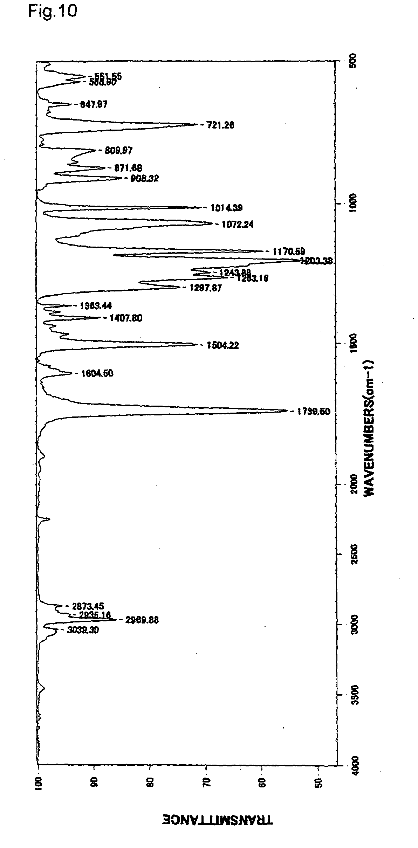

Spectrum data of polyarylate (Polyarylate U-100, manufactured by UNICHIKA LTD.) are as follows. Figs. 5 and 10 show a¹H-NMR spectrum and a FT-IR spectrum of the polyarylate (Polyarylate U-100), respectively.
¹H-NMR(300MHz,CDCl₃)
   δ(ppm):7.6~9.0(8H,m,Ar-H);7.3(8H,d,Ar-H);7.2(8H,d,Ar-H);1.7(12H,s,C-CH₃)
FT-IR(film)
   *ṽ* (cm-¹):1739(v,C=O);1504(v,C=C);1203(v,C-O-C)

The product synthesized by Example 2 was identified as a polyarylate grafted triethoxysilyl groups in its main chain by comparison and observational study of the analyses.

### Example 3: Synthesis of polyethylene terephthalate grafted reactive silicon-containing groups in its main chain

### Example 3-1: Synthesis of polyethylene terephthalate grafted allyl groups in its main chain

Polyethylene terephthalate (60.0g, 3.3mmol, manufactured by Aldrich Co.), 350g (3.1mol) of allyl glycidyl ether and 64.5g (154mmol) of tetrabutylphosphonium bromide were added to a 1L three-necked flask, then the mixture was heated with stirring about 153°C for 6 hours under nitrogen atmosphere. After being cooled, the reaction mixture was poured gradually into excessive amounts of methanol and resulting precipitate was collected. The collected precipitate was dissolved in 200ml of chloroform, and the mixture was heated with stirring about 56°C for 6 hours to extract a chloroform-soluble product. The resulting chloroform solution was concentrated so as to be a concentration of ten times. The resulting product was poured gradually into excessive amounts of methanol again to be purified. After being dried, polyethylene terephthalate which is grafted with allyl groups in its main chain was obtained (3.0g, a yield of 2.3%). GPC showed that the average molecular weight of the resultant product was 2000. A spectrum data of resulting polyethylene terephthalate is as follows;
¹H-NMR(300MHz,CDCl₃)
   - δ(ppm):: 8.1(11H,w,Ar-H);
   5.9(1H,b,H₂C=CH-CH₂-);
   5.3~5.1(2H,b,H₂C=CH-CH₂-);
   4.7,4.5(11 H,b,-CH₂CH₂-);
   4.0(3H,m-b,H₂C=CH-CH₂-,-CH₂-CH-CH₂-);
   3.8~3.5(4H,m-b,-CH₂-CH-CH₂-);
FT-IR(Neat)
   *ṽ*(cm⁻¹):1722(v,C=O);1263(v,C-O-C)
GPC
   Weight-average molecular weight: 2000 (standard polystylene conversion)

**ELEMENTARY ANALYSIS**

| | |
|---|---|
| Theoretical value(%) | C:62.6;H:4.9 |
| Observed value(%) | C:61.3;H:4.9 |

Analyses of polyethylene terephthalate (manufactured by Aldrich Co.) as a raw material are shown by way of comparison;
FT-IR(ATR)
   *ṽ* (cm⁻¹):1716(v,C=O);1238(v,C-O-C)

One allyl group grafting per six ester groups was observed by ¹H-NMR. The number of inserted allyl group per molecule was about 3.

### Example 3-2: Synthesis of polyethylene terephthalate grafted reactive silicon-containing groups in its main chain

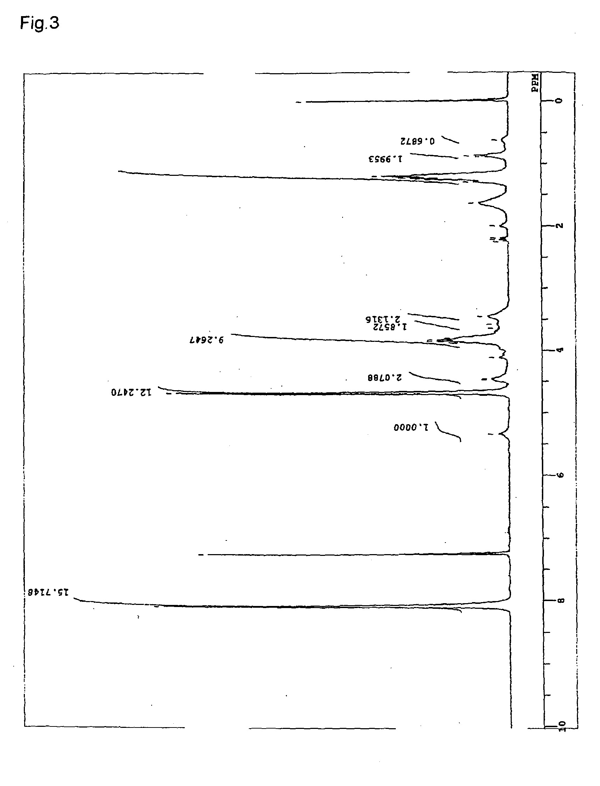

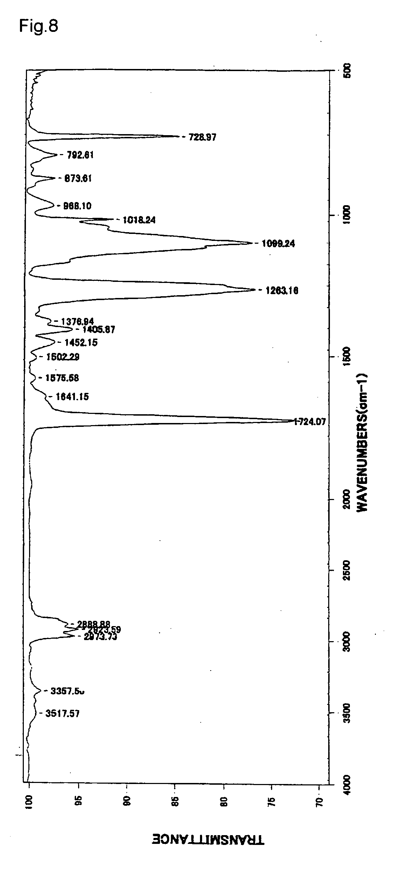

Polyethylene terephthalate grafted allyl groups obtained in Example 3-1 (2.0g, 1.0mmol) and a catalytic amount of chloroplatinic acid were added to 40ml of chloroform, and 1.3g (7.9mmol) of triethoxysilane was added, then the mixture was heated with stirring about 62°C for 22 hours under nitrogen atmosphere. After being cooled, the reaction mixture was filtered to remove a solid, and the resulting filtrate was devolatilized to remove solvents and volatile components. After being dried, polyethylene terephthalate which is grafted with triethoxysilyl groups in its main chain was obtained (2.3g, a yield of 95.1 %). GPC showed that the average molecular weight of the resultant product was 2200. An average of three triethoxysilyl groups grafting per one molecule of polyethylene terephthalate was observed by ¹H-NMR. Furthermore, a portion of the triethoxysilyl groups was reacted with excessive amounts of triethoxysilane. An elementary analysis data including Si-value and a spectrum data of the resulting polyethylene terephthalate is as follows. Figs. 3 and 8 show a ¹H-NMR spectrum and a FT-IR spectrum of the resulting polyarylate, respectively.

**ELEMENTARY ANALYSIS**

| | |
|---|---|
| Theoretical value(%) | C:55.9;H:6.0;Si:5.9 |
| Observed value(%) | C:53.6;H:5.2;Si:5.4 |

¹H-NMR(300MHz, CDCl₃)
   δ(ppm):8.1(16H, s,Ar-H);4.4~4.7(14H,w, O-CH₂CH₂-O);3.8(9H,q,SiO-CH₂);1.2(12H,t,SiOCH₂-CH₃)
FT-IR(film)
   *ṽ* (cm⁻¹):1724(v,C=O);1263(v,C-O-C); 1099(v,Si-O-C)

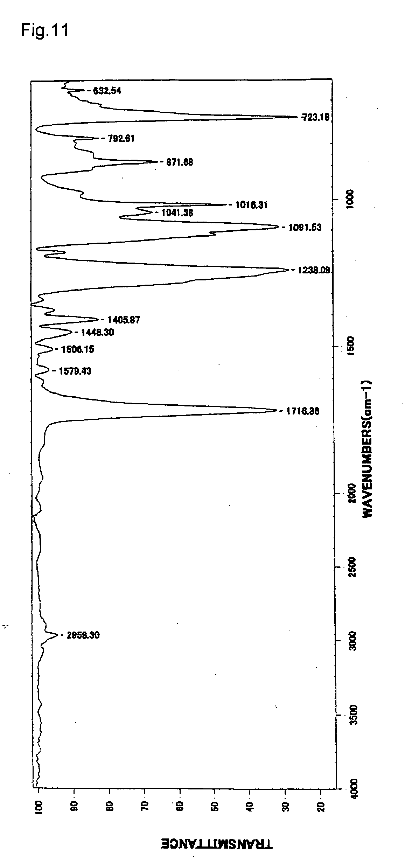

A spectrum data of polyethylene terephthalate (manufactured by Aldrich Co.) used as a raw material is as follows. Fig. 11 shows a FT-IR spectrum of the polyethylene terephthalate.
FT-IR(film)
   *ṽ* (cm⁻¹):1716(v,C=O),1238(v,C-O-C)

The product synthesized by Example 3 was identified as a polyethylene terephthalate which is grafted with reactive silicon-containing groups in its main chain by comparison and observational study of the analyses.

### Example 4: Formation of organic-inorganic hybrid polymeric material by sol-qel reaction

Polycarbonate grafted triethoxysilyl groups (1.0g) obtained in- Example 1 was dissolved in 10ml of tetrahydrofuran, then 0.22g of 1 mol/L(liter) solution of hydrochloric acid was added. The resulting solution was stirred at a room temperature for 10 minutes. The resulting solution was divided into two portions, one of which was used for spin coating onto a glass substrate and the other was cast on a petri dish made of polyethylene to evaporate the solvent, whereby obtaining an transparent film with a thickness of approximately 50µm.

### Example 5: Formation of organic-inorganic hybrid polymeric material by sol-gel reaction

Polyarylate grafted triethoxysilyl groups (1.0g) obtained in Example 2 was dissolved in 10ml of tetrahydrofuran, then 0.21 g of 1mol/L(liter) solution of hydrochloric acid was added. The resulting solution was stirred at a room temperature for 10 minutes. The resulting solution was divided into two portions, one of which was used for spin coating onto a glass substrate and the other was cast on a petri dish made of polyethylene to evaporate the solvent, whereby obtaining an transparent film with a thickness of approximately 50µm.

### Example 6: Formation of organic-inorganic hybrid polymeric material by sol-gel reaction

Polyethylene terephthalate grafted triethoxysilyl groups (1.0g) obtained in Example 3 was dissolved in 10ml of tetrahydrofuran, then 0.18g of 1 mol/L(liter) solution of hydrochloric acid was added. The resulting solution was stirred at a room temperature for 10 minutes. The resulting solution was divided into two portions, one of which was used for spin coating onto a glass substrate and the other was cast on a petri dish made of polyethylene to evaporate the solvent, whereby obtaining an transparent film with a thickness of approximately 50µm.

### Example 7: Synthesis of polycarbonate grafted reactive silicon-containing groups in its main chain and formation of organic-inorganic hybrid polymeric material by sol-gel reaction

Polycarbonate (5.0g, 0.24mmol, lupilon H-4000, manufactured by MITSUBISHI ENGINEERING-PLASTICS CORPORATION), 6.6g (24mmol) of 3-glycidoxypropyltriethoxysilane and 0.08g (0.24mmol) of tetrabutylphosphonium bromide were added to a 50ml three-necked flask, then the mixture was heated with stirring about 200°C for 30 minuites. After being cooled, the reaction mixture was dissolved in chloroform, and the solution was poured gradually into excessive amounts of methanol, then the resulting precipitate was collected. The collected precipitate was reprecipitated in chloroform/methanol to be purified. The resultant product was 5.3g (a yield of 51.0%). GPC showed that the average molecular weight of the resultant product was 4000. ¹H-NMR shows characteristic peaks (δ:5.2ppm and 4.1 ppm) of methine group and methylene group which were shown by ring-opening of oxirane involving transesterification reaction. The appearance of the characteristic peaks means an insertion of triethoxysilyl group into a main chain of polycarbonate.

The resulting polycarbonate grafted triethoxysilyl groups obtained was dissolved in tetrahydrofuran, then 1 mol/L(liter) solution of hydrochloric acid was added. The resulting solution was used for spin coating onto a glass substrate or cast on a petri dish made of polyethylene, whereby obtaining an transparent film.

### Example 8: Synthesis of polycarbonate grafted methacrylic groups in its main chain

Polycarbonate (3.0g, 83µmol, lupilon E-2000, manufactured by MITSUBISHI ENGINEERING-PLASTICS CORPORATION), 8.3g (59mmol) of glycidyl methacrylate and 0.04g (117µmol) of tetrabutylphosphonium bromide were added to a 25ml three-necked flask, then the mixture was heated with stirring about 100°C for 1 hour. After being cooled, the reaction mixture was dissolved in chloroform, and the solution was poured gradually into excessive amounts of methanol, then the resulting precipitate was collected. The collected precipitate was dissolved in chloroform, and was poured gradually into excessive amounts of methanol again to be purified. A weight of obtained product after drying was 4.1 g (a yield of 87%). A spectrum data of resulting polycarbonate is as follows;
¹H-NMR(300MHz, CDCl₃)
   - δ(ppm):: 7.2~6.8(BH,m,Ar-H);
   6.1,5.6(2H,2S,H₂C=C-); 5.5~5.3(1H,m,-CH₂-CH-CH₂-);
   4.6~4.3(2H,m,-CH₂-CH-CH₂-);
   4.2~4.1 (2H,w,-CH₂-CH-CH₂-);
   1.9(3H,s,H₂C=C-CH₃);
   1.6(6H,s,-C-CH₃)
FT-IR(Neat) *ṽ* (cm⁻¹):1762(v,C=O);1722(v,C=O);
   1508(v,C=C);1236(v,C-O-C)
GPC
   Weight-average molecular weight: 11500(standard polystylene conversion)

**ELEMENTARY ANALYSIS**

| | |
|---|---|
| Theoretical value(%) | C:69.7;H:6.1 |
| Observed value(%) | C:69.0;H:6.1 |

The product synthesized by Example 8 was identified as one mathacrylic group per one carbonate group being grafted by observational study of the analyses. The number of inserted mathacrylic group per molecule was about 29.

### Example 9: Synthesis of polycarbonate grafted vinyl groups in its main chain

Polycarbonate (1.0g, 28µmol, lupilon E-2000, manufactured by MITSUBISHI ENGINEERING-PLASTICS CORPORATION), 5.7g (59mmol) of 1,2-epoxy-5-hexene and 0.2g (390µmol) of tetraphenylphosphonium bromide were added to a 25ml three-necked flask, then the mixture was heated with stirring about 122°C for 15 hours under nitrogen atmosphere. After being cooled, the reaction mixture was poured gradually into excessive amounts of methanol, then the resulting precipitate was collected. The collected precipitate was dissolved in chloroform, and was poured gradually into excessive amounts of methanol again to be purified. A weight of obtained product after drying was 0.3g (a yield of 24%). A spectrum data of resulting polycarbonate is as follows;
¹H-NMR(300MHz-CDCl₃)
   - δ(ppm):: 7.2~6.8(6H,m,Ar-H);
   5.8(1H,m,H₂C=CH-CH₂-);
   4.1~3.8(2H,m,-CH₂-CH-CH₂-);
   2.2(2H,m;H₂C=CH-CH₂-);
   1.9(2H,m,-CH₂-CH-CH₂-);
   1.6(SH,s,-C-CH₃)
FT-IR(Neat)
   *ṽ* (cm⁻¹):2967(v,C-H);1756(v,C=O);
   1508(v,C=C);1255(v,C-O-C)
GPC
   Weight-average molecular weight:4800(standard polystylene conversion)

**ELEMENTARY ANALYSIS**

| | |
|---|---|
| Theoretical value(%) | C:74.9;H:7.1 |
| Observed value(%) | C:73.8;H:7.1 |

The product synthesized by Example 9 was identified as one vinyl group per one carbonate group being grafted by observational study of the analyses. The number of inserted vinyl group per molecule was about 16.

### Example 10: Synthesis of polyarylate grafted methacrylic groups in its main chain

Polyarylate(2.0g, 32µmol, Polyarylate U-100, manufactured by UNICHIKA LTD.), 7.9g (56mmol) of glycidyl methacrylate and 0.04g (111µmol) of tetraphenylphosphonium bromide were added to a 25ml three-necked flask, then the mixture was heated with stirring about 97°C for 1 hour. After being cooled, the reaction mixture was dissolved in chloroform, and the solution was poured gradually into excessive amounts of methanol, then the resulting precipitate was collected. The collected precipitate was dissolved in chloroform, and was poured gradually into excessive amounts of methanol again to be purified. A weight of obtained product after drying was 2.5g (a yield of 69%). A spectrum data of resulting polyarylate is as follows;
¹H-NMR(300MHz, CDCl₃)
   - δ(ppm):: 9.0~7.5(3H,m,Ar-H);
   7.3~6.7(6H, m,Ar-H);
   6.1~5.5(3H,m,H₂C=C-,-CH₂-CH-CH₂-);
   4.7~4.1 (4H,m,-CH₂-CH-CH₂-);
   1.9(3H,s,H₂C=C-CH₃);
   1.7~1.5(5H,3s,-C-CH₃)
FT-IR(Neat)
   *ṽ* (cm⁻¹):1726(v,C=O);1508(v,C=C),
   1238(v, C-O-C)
GPC
   Weight-average molecular weight: 10100(standard polystylene conversion)

**ELEMENTARY ANALYSIS**

| | |
|---|---|
| Theoretical value(%) | C:71.0;H:5.8 |
| Observed value(%) | C:70.2;H:5.7 |

The product synthesized by Example 10 was identified as one mathacrylic group per two carbonate groups being grafted by observational study of the analyses. The number of inserted mathacrylic group per molecule was about 24.

### Example 11: Synthesis of polycarbonate grafted allyl groups in its main chain (reaction in solid system: MC6-1)

Polycarbonate (10.0g, 0.2mmol, lupilon S-2000, manufactured by MITSUBISHI ENGINEERING-PLASTICS CORPORATION), 4.5g (39mmol) of allyl glycidyl ether and 0.07g (0.2mmol) of tetraphenylphosphonium bromide were dissolved in 200ml of chloroform, then the solution was cast on a petri dish made of glass to remove chloroform, to obtain a solid mixture of material. The mixture was put into a hot-air dryer about 70°C for 9 hours. After being cooled, the mixture was dissolved in chloroform again, and was poured gradually into excessive amounts of methanol to precipitate a reaction product. The precipitate was filtered and dried. A weight of obtained product was 9.2g (a yield of 64%). A spectrum data of resulting polycarbonate is as follows;
¹H-NMR(300MHz, CDCl₃)
   - δ(ppm):: 7.2~6.7(176H,m,Ar-H);
   5.9(1H,m,H₂C=CH-CH₂-);
   5.2(3H,m,H₂C=CH-CH₂-,-CH₂-CH-CH₂-);
   4.2(2H,w,-CH₂-CH-CH₂-);
   4.0(2H,w,H₂C=CH-CH₂-);
   3.8(2H,w,-CH₂-CH-CH₂-);
   1.6(132H,s,-C-CH₃)
FT-IR(Neat)
   *ṽ* (Cm⁻¹):2969(v,C-H);1774(v,C=O);
   1508(v,C=C);1232(v,C-O-C)
GPC
   Weight-average molecular weight: 18400(standard polystylene conversion)

The product synthesized by Example 11 was identified as one allyl group per 22 carbonate groups being grafted by observational study of the analyses. The number of inserted allyl group per molecule was about 3.

### Example 12: Synthesis of polycarbonate grafted allyl groups in its main chain (reaction in solution system: MC4-1)

Polycarbonate (1500g, 40mmol, lupilon H-4000, manufactured by MITSUBISHI ENGINEERING-PLASTICS CORPORATION), 134g (1.2mol) of allyl glycidyl ether and 36g (0.1mol) of tetraphenylphosphonium bromide were mixed with Henschel Mixer FM10B (manufactured by MITSUI MIIKE KAKOKI CO., LTD) to uniform the mixture. The mixture was put into high-speed type small size twin screw extruder (KZW15-45MG, manufactured by TECHNOVEL CORPORATION) and kneaded in melt system by feeder rotation speed: 50rpm, screw rotation speed: 200rpm and temperature: 280°C. The obtained strand was cooled, and was pelletized by a pelleting machine. A portion of the resulting pellets was dissolved in chloroform, and the solution was poured gradually into excessive amounts of methanol to be purified. The resulting product was analyzed. A spectrum data of resulting polycarbonate is as follows;
¹H-NMR(300MHz, CDCl₃)
   - δ(ppm):: 7.2~6.7(92H,m,Ar-H);
   5.9(1H,m,H₂C=CH-CH₂-);
   5.2(3H,m,H₂C=CH-CH₂-,-CH₂-CH-CH₂-);
   4.2(2H,w,-CH₂-CH-CH₂-);
   4.0(2H,w,H₂C=CH-CH₂-);
   3.8(2H,w,-CH₂-CH-CH₂-);
   3.8(2H,w,-CH₂-CH-CH₂-);
   1.6(69H,s,-C-CH₃)
FT-IR(Neat)
   *ṽ* (cm⁻¹):2969(v,C-H);1772(v,C=O);
   1508(v,C=C);1232(v,C-O-C)
GPC
   Weight-average molecular weight: 8400(standard polystylene conversion)

The product synthesized by Example 12 was identified as one allyl group per 12 carbonate groups being grafted by observational study of the analyses. The number of inserted allyl group per molecule was about 3.

### Comparative Example 1

A solution of 0.2 g of polycarbonate (lupilon H-4000, manufactured by MITSUBISHI ENGINEERING-PLASTICS CORPORATION) in 5 ml of chloroform was spin-coated on a glass substrate.

### Comparative Example 2

A solution of 0.2 g of polyarylate (Polyarylate U-100, manufactured by UNICHIKA LTD.) in 5 ml of chloroform was spin-coated on a glass substrate.

### Comparative Example 3

A solution of 0.2 g of polyethylene terephthalate (manufactured by Aldrich Co.) in 5 ml of chloroform was spin-coated on a glass substrate.

The surface hardness of films obtained in Examples 4 to 7 and Comparative Examples 1 to 3 was measured by pencil hardness. The test result shows that organic-inorganic hybrid polymeric materials produced from polycarbonate, plyarylate or polyethylene terephthalate having an alkoxysilyl group of the present invention have an excellent surface hardness. Table 1 shows the results together with the results of evaluating cast film external appearances.

Table 1

**External appearances and surface hardness of hybrid polymeric material**

| Examples | External Appearances | | | Surface Hardness | |
|---|---|---|---|---|---|
| | Film Film Thicknes s(µm) | Formability | Transparency | Film Thickness (µm) | Surface Hardness |
| Example 4 | 50 | o | o | not more than 1 | 4H |
| Comparative Example 1 | - | - | - | not more than 1 | HB |
| Example 5 | 50 | o | o | not more than 1 | 4H |
| Comparative Example 2 | - | - | - | not more than 1 | HB |
| Example 6 | 50 | o | o | not more than 1 | 5H |
| Comparative Example 3 | - | - | - | not more than 1 | HB |
| Example 7 | 50 | o | o | not more than 1 | 3H |

## Claims

1. A polycarbonate or polyester having in its backbone a unit represented by the following formula: 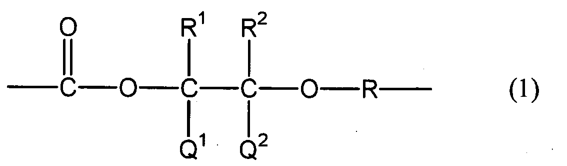 wherein, either one of Q¹ or Q² is a side chain having a reactive silicon-containing group,
the other of Q¹ or Q², and R¹, R² are each independently a hydrogen atom, or an alkyl group, an aryl group, an aroyl group or an aralkyl group, wherein the group being may have a substituted group or atom,
Q¹ and Q² may be taken together to form a ring,
R¹ and R² may be taken together to form a ring, and
R is a bivalent group of alkylene group, arylene group or combination thereof.

2. A polycarbonate having a repeating unit represented by the following formula 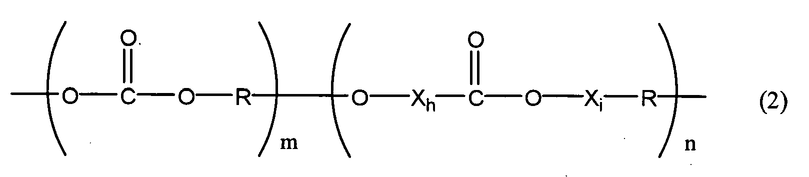 wherein, each R is independently a bivalent group of alkylene group, arylene group or combination thereof, and
X is a unit represented by the following formula 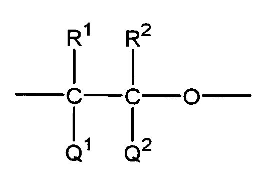 wherein, either Q¹ or Q² is a side chain having a reactive silicon-containing group,
the other of Q¹ or Q², and R¹, R² are each independently hydrogen atom, or an alkyl group, an aryl group, an aroyl group or an aralkyl group, wherein the groups may have a substituted group or atom,
Q¹ and Q² may be taken together to form a ring,
R¹ and R² may be taken together to form a ring, and
h and i are each independently 0 or 1, excepting both h and i are 0,
m is an integer not less than 0, and
n is an integer not less than 1.

3. A polycarbonate according to Claim 2, wherein said R is independently a bivalent group of linear or branched alkylene group having 1 to 20 carbon atoms, arylene group having 3 to 20 carbon atoms or combination thereof, and
the other of said Q¹ or Q², and R¹, R² are each independently hydrogen atom, or an alkyl group having 1 to 12 carbon atoms, an aryl group having 6 to 20 carbon atoms, an aroyl group having 6 to 20 carbon atoms or an aralkyl group having 6 to 20 carbon atoms, wherein the groups may have a substituted group or atom,
Q¹ and Q² may be taken together to form a ring, and
R¹ and R² may be taken together to form a ring.

4. A polyester comprising a repeating unit represented by the following formula 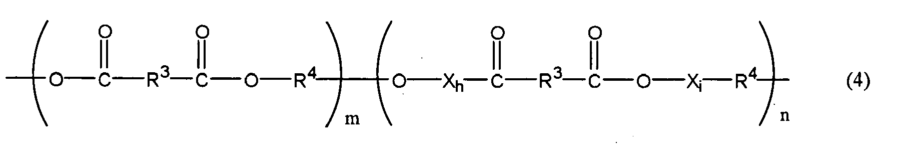 wherein, R³ and R⁴ are each independently a bivalent group of alkylene group, arylene group or combination thereof, and
X is a unit represented by the following formula 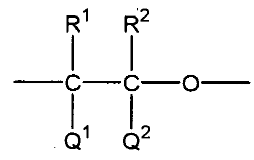 wherein, either Q¹ or Q² is a side chain having a reactive silicon-containing group,
the other of Q¹ or Q², and R¹, R² are each independently hydrogen atom, or an alkyl group, an aryl group, an aroyl group or an aralkyl group, wherein the groups may have a substituted group or atom,
Q¹ and Q² may be taken together to form a ring,
R¹ and R² may be taken together to form a ring, and
h and i are each independently 0 or 1, excepting both h and i are 0,
m is an integer not less than 0, and
n is an integer not less than 1.

5. A polyester according to Claim 4, wherein said R³ and R⁴ are each independently a bivalent group of linear or branched alkylene group having 1 to 20 carbon atoms, arylene group having 3 to 20 carbon atoms or combination thereof, and
the other of said Q¹ or Q², and R¹, R² are each independently hydrogen atom, or an alkyl group having 1 to 12 carbon atoms, an aryl group having 6 to 20 carbon atoms, an aroyl group having 6 to 20 carbon atoms or an aralkyl group having 6 to 20 carbon atoms, wherein the groups may have a substituted group or atom,
Q¹ and Q² may be taken together to form a ring, and
R¹ and R² may be taken together to form a ring.

6. A polycarbonate or polyester according to any one of Claims 1 to 5, wherein said reactive silicon-containing group is alkoxysilyl group.

7. A polycarbonate or polyester according to any one of Claims 1 to 5, wherein said side chain having a reactive silicon-containing group comprises a structure represented by the following formula
―L¹―Si(OR⁵)ₚR⁶₃₋ₚ (3)
wherein, L¹ is a binding group,
R⁵ is hydrogen atom, or an alkyl group having 1 to 12 carbon atoms, an aryl group having 6 to 20 carbon atoms, an aralkyl group having 6 to 20 carbon atoms, acetyl or acetoacetyl group,
R⁶ is hydrogen or halogen atom, or an alkyl group having 1 to 12 carbon atoms, an aryl group having 6 to 20 carbon atoms, an aralkyl group having 6 to 20 carbon atoms, and
p is an integer of 1 to 3.

8. A method for preparing a polycarbonate or polyester having reactive silicon-containing groups, comprising the step of:
inserting an oxirane compound having a reactive silicon-containing group into an ester-bond of a polycarbonate or polyester which exists in its main chain.

9. A method for preparing a polycarbonate or polyester comprising reactive silicon-containing groups, comprising the steps of:
inserting an oxirane compound having an unsaturated bond-containing group into an ester-bond of a polycarbonate or polyester which exists in its main chain, and
reacting a obtained unsaturated group in the polycarbonate or polyester with a silicon compound having a reactive silicon-containing group in a hydrosilylation process.

10. A polycarbonate or polyester comprising reactive silicon-containing groups, which is obtainable from the method according to Claim 8 or 9.

11. A method for preparing an organic-inorganic hybrid polymeric material, comprising the step of:
hydrolyzing and polycondensing the polycarbonate or polyester having reactive silicon-containing groups according to any one of Claims 1 to 7 or Claim 10.

12. A method for preparing an organic-inorganic hybrid polymeric material, comprising the step of:
hydrolyzing and polycondensing the polycarbonate or polyester having reactive silicon-containing groups of any one of Claims 1 to 7 or Claim 10 in the presence of a metal, a metal alkoxide compound, a metal oxide, a metal complex or an inorganic salt selected from the group consisting of Si, Ti, Zr, Al, Fe, Cu, Sn, B, Ge, Ce, Ta and W.

13. An organic-inorganic hybrid polymeric material, which is obtainable from the method according to Claim 11 or 12.

14. A polycarbonate or polyester comprising a unit represented by the following formula 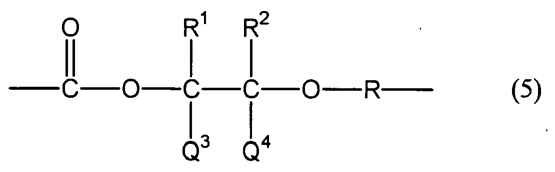 wherein, either Q³ or Q⁴ is a side chain having a carbon-carbon unsaturated bond-containing group, the other of Q³ or Q⁴, and R¹, R² are each independently hydrogen atom, or an alkyl group, an aryl group, an aroyl group or an aralkyl group, wherein the groups may have a substituted group or atom,
Q³ or Q⁴ may be taken together to form a ring,
R¹ and R² may be taken together to form a ring, and
R is a bivalent group of alkylene group, arylene group or combination thereof.

15. A polycarbonate comprising a repeating unit represented by the following formula 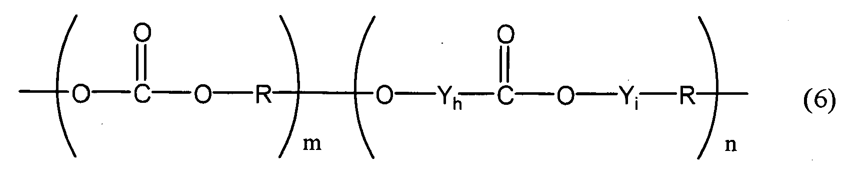 wherein, each R is independently a bivalent group of alkylene group, arylene group or combination thereof, and
Y is a unit represented by the following formula 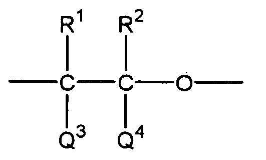 wherein, either Q³ or Q⁴ is a side chain having a carbon-carbon unsaturated bond-containing group,
the other of Q³ or Q⁴, and R¹, R² are each independently hydrogen atom, or an alkyl group, an aryl group, an aroyl group or an aralkyl group, wherein the groups may have a substituted group or atom,
Q³ or Q⁴ may be taken together to form a ring,
R¹ and R² may be taken together to form a ring, and
h and i are each independently 0 or 1, excepting both h and i are 0,
m is an integer not less than 0, and
n is an integer not less than 1.

16. A polycarbonate according to Claim 15, wherein said R is independently a bivalent group of linear or branched alkylene group having 1 to 20 carbon atoms, arylene group having 3 to 20 carbon atoms or combination thereof, and
the other of said Q³ or Q⁴, and R¹, R² are each independently hydrogen atom, or an alkyl group having 1 to 12 carbon atoms, an aryl group having 6 to 20 carbon atoms, an aroyl group having 6 to 20 carbon atoms or an aralkyl group having 6 to 20 carbon atoms, wherein the groups may have a substituted group or atom,
Q³ or Q⁴ may be taken together to form a ring, and
R¹ and R² may be taken together to form a ring.

17. A polyester comprising a repeating unit represented by the following formula 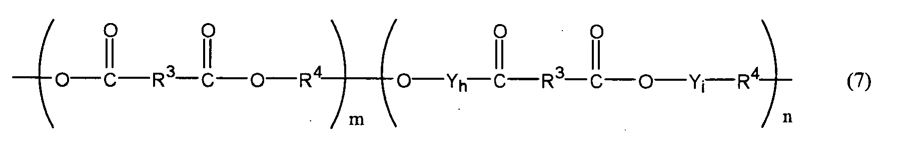 wherein, R³ and R⁴ are each independently a bivalent group of alkylene group, arylene group or combination thereof, and
Y is a unit represented by the following formula 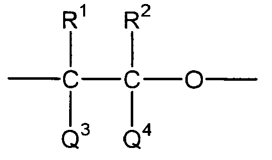 wherein, either Q³ or Q⁴ is a side chain having a carbon-carbon unsaturated bond-containing group,
the other of Q³ or Q⁴, and R¹, R² are each independently hydrogen atom, or an alkyl group, an aryl group, an aroyl group or an aralkyl group, wherein the groups may have a substituted group or atom,
Q³ or Q⁴ may be taken together to form a ring,
R¹ and R² may be taken together to form a ring, and
h and i are each independently 0 or 1, excepting both h and i are 0,
m is an integer not less than 0, and
n is an integer not less than 1.

18. A polyester according to Claim 17, wherein said R³ and R⁴ are each independently a bivalent group of linear or branched alkylene group having 1 to 20 carbon atoms, arylene group having 3 to 20 carbon atoms or combination thereof, and
the other of said Q³ or Q⁴, and R¹, R² are each independently hydrogen atom, or an alkyl group having 1 to 12 carbon atoms, an aryl group having 6 to 20 carbon atoms, an aroyl group having 6 to 20 carbon atoms or an aralkyl group having 6 to 20 carbon atoms, wherein the groups may have a substituted group or atom,
Q³ or Q⁴ may be taken together to form a ring, and
R¹ and R² may be taken together to form a ring.

19. A polycarbonate or polyester according to any one of Claims 14 to 18, wherein said carbon-carbon unsaturated bond-containing group is a group selected from the group consisting of a vinyl group, a methacryl group, an allyl group, an acryl group and an ethynyl group.

20. A polycarbonate or polyester according to any one of Claims 14 to 18, wherein said carbon-carbon unsaturated bond-containing group is a vinyl group, a methacryl group, an allyl group or an ethynyl group.

21. A method for preparing a polycarbonate or polyester having carbon-carbon unsaturated bond-containing groups, comprising the step of:
inserting a oxirane compound having a carbon-carbon unsaturated bond-containing group into an ester-bond of a polycarbonate or polyester which exists in its main chain.

22. A method for preparing a polycarbonate or polyester having carbon-carbon unsaturated bond-containing groups according to Claim 21, wherein said inserting step is performed by heat melting of the materials in a kneading machine.

23. A method for preparing a polycarbonate or polyester having carbon-carbon unsaturated bond-containing groups according to Claim 22, wherein said kneading machine is a twin screw extruder.

24. A polycarbonate or polyester having carbon-carbon unsaturated bond-containing groups, which is obtainable from the method according to any one of Claims 21 to 23.

25. A polycarbonate or polyester which is grafted with a vinyl group, a methacryl group, an allyl group or an ethynyl group, which is obtainable from the step of inserting a oxirane compound having a carbon-carbon unsaturated bond-containing group into an ester-bond of a polycarbonate or polyester which exists in its main chain.
